(19) Europäisches Patentamt
European Patent Office
Office européen des brevets

(11) Publication number: **0 386 243 A1**

(12) **EUROPEAN PATENT APPLICATION published in accordance with Art. 158(3) EPC**

(21) Application number: **88909613.7**

(22) Date of filing: **05.11.88**

(86) International application number: **PCT/JP88/01123**

(87) International publication number: **WO 89/04317 (18.05.89 89/11)**

(51) Int. Cl.[5]: **C07F 15/00, C07C 87/14, A61K 31/28**

(30) Priority: **06.11.87 JP 279149/87**
**11.03.88 JP 56152/88**
**30.03.88 JP 74677/88**

(43) Date of publication of application: **12.09.90 Bulletin 90/37**

(84) Designated Contracting States: **CH DE FR GB IT LI**

(71) Applicant: **SAGAMI CHEMICAL RESEARCH CENTER**
**4-5, Marunouchi 1-chome**
**Chiyoda-ku Tokyo 100(JP)**

Applicant: **Chisso Corporation**
**6-32, Nakanoshima 3-chome Kita-ku**
**Osaka-shi Osaka-fu(JP)**

(72) Inventor: **HIRAI, Kenji**
**9-2-104, Minamidai 1-chome Sagamihara-shi**
**Kanagawa 228(JP)**
Inventor: **FUJITA, Atsuko**
**9-3-401, Konakadai 5-chome Chiba-shi**
**Chiba 280(JP)**
Inventor: **YOKOTA, Masahiro A-204**
**17, Tatsumidaihigashi 2-chome Ichihara-shi**
**Chiba 290(JP)**
Inventor: **YAMADA, Kaoru**
**10-33, Seijo 3-chome Setagaya-ku**
**Tokyo 157(JP)**
Inventor: **ISHII, Yoshimitsu**
**2508, Sakai Atsugi-shi**
**Kanagawa 243(JP)**

(74) Representative: **Vossius & Partner**
**Siebertstrasse 4 P.O. Box 86 07 67**
**D-8000 München 86(DE)**

(54) **PLATINUM (II) COMPLEXES.**

(57) Novel platinum (II) complexes represented by general formula (I), wherein AB represents a bidentate diamine ligand, $R^1$ and $R^2$ independently represent a hydrogen atom or an alkyl group containing 1 to 8 carbon atoms, provided that $R^1$ and $R^2$ do not represent hydrogen atoms at the same time, Ar

EP 0 386 243 A1

represents an aryl group, and n represents 0 or 1. The platinum (II) complexes have a strong growth inhibiting action on P-388 mouse leukemia cells and are used as novel substances having an oncostatic activity.

TITLE MODIFIED
see front page



SPECIFICATION

PLATINUM (II) COMPLEX

TECHNICAL FIELD:

The present invention relates to a novel platinum (II) complex having antitumor activity. More particularly, the present invention relates to a novel antitumor platinum (II) complex having a 2-arylalkanoic acid or 3-aryl-2-oxoalkanoic acid as a ligand.

BACKGROUND ART:

Ever since the discovery of its pronounced antitumor activity (see Nature, 222, 385, 1969), cisplatin (cis-diamminedichloroplatinum) has been the subject of extensive R&D efforts and is now clinically used as an antitumor agent in several countries. However, cisplatin has strong side effects such as nephrotoxicity, nausea, vomiting and hearing loss. Further, both the water and the lipid solubility of cisplatin are too low thus rendering its administration difficult. Because of these problems, the clinical use of cisplatin has been limited. With a view to overcoming these difficulties, many researchers have been engaged in active efforts to synthesize platinum complexes of a second generation that have a stronger antitumor activity and yet have less severe side effects than cisplatin. The platinum complexes that have proved to be of clinical value in clinical tests include cis-diammine(1,1-cyclobutanedicarboxylato)platinum (II), cis-dichloro-trans-dihydroxybis(isopropylamine)platinum (IV) and cis-diammineglycolatoplatinum (II) (see Gann to Kagakuryoho, 14(4), 1043, 1987). Studies on carrier ligands are also being carried out and alicyclic diamines such as 1,2-diaminocyclohexane, 2-(aminomethyl)cyclohexylamine and 1-(aminomethyl)cyclooctylamine have been combined, leaving groups such as pyruvato, arylpyruvato, glycolato, cyclobutanedicarboxylato and substituted phthalato to synthesize many platinum complexes (see, for example, Japanese Patent Public Disclosure Nos. 171493/1986, 229893/1986, 87692/1986, 15892/1986 and 59289/1987).

PROBLEMS TO BE SOLVED BY THE INVENTION:

Despite the efforts heretofore made, no platinum complexes have been found that have completely satisfactory antitumor activity. The principal object, therefore, of the present invention is to provide a novel platinum complex that has pronounced antitumor activity and yet has less severe side effects than cisplatin.

The present inventors conducted intensive studies in order to solve the aforementioned problems of the prior art and, as a result, they succeeded in synthesizing a platinum (II) complex that has a 2-arylalkanoic acid or 3-aryl-2-oxoalkanoic acid as a ligand that works as a leaving group. This compound was found to have a strong growth inhibitory action on P-388 mouse leukemia cells. The present invention has been accomplished on the basis of this finding.

DISCLOSURE OF THE INVENTION:

The present invention relates to a novel platinum (II) complex that is represented by the general formula (1):

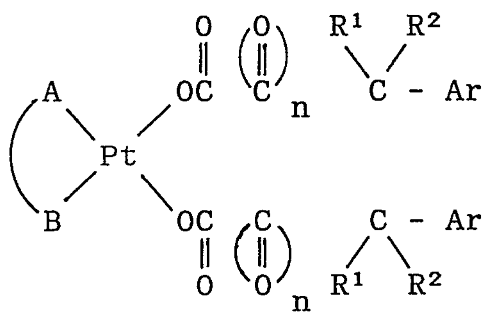

(1)

(where $\widehat{AB}$ is a diamine bidentate ligand; $R^1$ and $R^2$ each independently represents a hydrogen atom or an alkyl group having 1 - 8 carbon atoms, provided that $R^1$ and $R^2$ are not both a hydrogen atom; Ar is an aryl group; and n is 0 or 1).

The platinum (II) complex of the present invention which is represented by the general formula (1) has the diamine bidentate ligand $\widehat{AB}$ as a carrier ligand, and a 2-arylcarboxylato or 3-aryl-2-oxocarboxylato group as a leaving group.

Illustrative diamine bidentate ligands include aliphatic chained diamine compounds such as ethylenediamine, 1,2-diaminopropane, 1,3-diaminopropane, 1,3-diaminobutane, 2,3-diaminobutane and N,N'-dimethylethylenediamine, and

alicyclic diamine derivatives such as 1,2-diaminocyclohexane, 1,2-diaminocyclopentane, 1,2-diaminocycloheptane, 1,2-diaminocyclooctane, 2-(aminomethyl)cyclopenthylamine, 2-(aminomethyl)cyclohexylamine, 2-(aminomethyl)cyclooctylamine, 2-(aminomethyl)pyrrolidine, N-ethyl-2-(aminomethyl)pyrrolidine, 2-(aminomethyl)piperidine, N-(2-aminoethyl)pyrrolidine and N-(2-aminoethyl)piperidine.

Bidentate ligands such as 1,2-diaminocyclohexane that have two asymmetric carbon atoms, one in 1-position and the other in 2-position, occur in three isomer forms, trans-ℓ, trans-d and cis (meso) forms, and the present invention encompasses all platinum (II) complexes that have these isomers, taken either individually or in combination, as ligands.

Illustrative 2-arylcarboxylic acids that can be used as leaving groups include: 2-phenylpropionic acid, 2-(p-methylphenyl)propionic acid, 2-(m-methylphenyl)propionic acid, 2-(p-ethylphenyl)propionic acid, 2-(p-isopropylphenyl)propionic acid, 2-(p-propylphenyl)propionic acid, 2-(p-isobutylphenyl)propionic acid, 2-(o,p-dimethylphenyl)propionic acid, 2-(m,p-dimethylphenyl)propionic acid, 2-(p-cyclohexylphenyl)propionic acid, 2-(p-methoxyphenyl)propionic acid, 2-(m-methoxyphenyl)propionic acid, 2-(p-phenoxyphenyl)propionic acid, 2-(m,p-dimethoxyphenyl)propionic acid, 2-(m,p-methylenedioxyphenyl)propionic acid, 2-(p-chlorophenyl)propionic acid, 2-(p-fluorophenyl)propionic acid, 2-(p-bromophenyl)propionic acid, 2-(m,p-dichlorophenyl)propionic acid, 2-(m,p-difluorophenyl)propionic acid, 2-(m,m-difluorophenyl)propionic acid, 2-(p-nitrophenyl)propionic acid, 2-(m-fluoro-p-isobutylphenyl)propionic acid, 2-{(m-fluoro-p-phenyl)phenyl}propionic acid, 2-(p-dimethylaminophenyl)propionic acid, 2-(p-acetylaminophenyl)propionic acid, 2-{p-bis(2"-chloroethyl)-aminophenyl}propionic acid, 2-(α-naphthyl)propionic acid, 2-(β-naphthyl)propionic acid, (+)-2-(6'-methoxy-β-

naphthyl)propionic acid, 2-phenylbutanoic acid, 2-(p-methylphenyl)butanoic acid, 2-(p-ethylphenyl)butanoic acid, 2-(p-isobutylphenyl)butanoic acid, 2-(m-methylphenyl)butanoic acid, 2-(p-methoxyphenyl)butanoic acid, 2-(m-methoxyphenyl)butanoic acid, 2-(p-fluorophenyl)butanoic acid, 2-(m,p-dimethoxyphenyl)butanoic acid, 2-phenyl-3-methylbutanoic acid, 2-phenyl-2-methylpropionic acid, 2-phenylpentanoic acid, 2-phenylhexanoic acid, 2-phenylheptanoic acid, 2-phenyloctanoic acid, 2-phenyl-4-methylpentanoic acid, 2-phenyl-3-methylpentanoic acid, 2-phenyl-2-methylbutanoic acid, 2-phenyl-2-butylhexanoic acid, 2-phenyl-3-hexyloctanoic acid, 2-phenyldecanoic acid and 2-phenyl-3-octyldecanoic acid. Some of these 2-arylcarboxylic acids such as (+)-2-(6'-methoxy-β-naphthyl)propionic acid and 2-(p-isobutylphenyl)propionic acid are bulk compounds for the production of medicines and are readily available as commercial products. Other 2-arylcarboxylic acids having various substituents can easily be synthesized by known procedures (see, for example, Japanese Patent Publication Nos. 35068/1978, 35069/1978 and 2934/1983, Japanese Patent Public Disclosure Nos. 7642/1978, 22613/1980, 99445/1981, 93933/1982, 179147/1985, and Keller, Phase-Transfer Reactions, Fluka-Compendium, Volume 2, pp. 729 - 732).

The 2-arylcarboxylic acids listed above may have an asymmetic carbon atom in 2-position. For example, they may be an S form which has an asymmetric carbon atom in 2-position as in the case of (+)-2-(6'-methoxy-β-naphthyl)propionic acid, or they may be a RS form in which the carbon atom in 2-position is not asymmetric as in the case of 2-(6'-methoxy-β-naphthyl)propionic acid. In the present invention, any of S, R and RS forms may be used as a leaving group.

Illustrative 3-aryl-2-oxoalkanoic acids that can be used as ligands include: 3-phenyl-2-oxobutanoic acid, 3-(p-methylphenyl)-2-oxobutanoic acid, 3-(p-ethylphenyl)-2-oxobutanoic acid, 3-(p-isopropylphenyl)-2-oxobutanoic acid, 3-(p-isobutylphenyl)-2-oxobutanoic acid, 3-(o,p-dimethylphenyl)-2-oxobutanoic acid, 3-(m,p-dimethylphenyl)-2-oxobutanoic acid, 3-(p-cyclohexylphenyl)-2-oxobutanoic acid, 3-(p-methoxyphenyl)-2-oxobutanoic acid, 3-(m,p-dimethoxyphenyl)-2-oxobutanoic acid, 3-(p-chlorophenyl)-2-oxobutanoic acid, 3-(p-fluorophenyl)-2-oxobutanoic acid, 3-(p-bromophenyl)-2-oxobutanoic acid, 3-(m,p-dichlorophenyl)-2-oxobutanoic acid, 3-(m,p-difluorophenyl)-2-oxobutanoic acid, 3-(m,m-difluorophenyl)-2-oxobutanoic acid, 3-(p-nitrophenyl)-2-oxobutanoic acid, 3-(p-dimethylaminophenyl)-2-oxobutanoic acid, 3-(p-acetylaminophenyl)-2-oxobutanoic acid, 3-(m-methylphenyl)-2-oxobutanoic acid, 3-(m-methoxyphenyl)-2-oxobutanoic acid, 3-(p-propylphenyl)-2-oxobutanoic acid, 3-(m,p-methylenedioxyphenyl)-2-oxobutanoic acid, 3-(p-phenoxyphenyl)-2-oxobutanoic acid, 3-phenyl-2-oxopentanoic acid, 3-(p-methylphenyl)-2-oxopentanoic acid, 3-(p-ethylphenyl)-2-oxopentanoic acid, 3-(p-isobutylphenyl)-2-oxopentanoic acid, 3-(p-chlorophenyl)-2-oxopentanoic acid, 3-(p-fluorophenyl)-2-oxopentanoic acid, 3-(p-bromophenyl)-2-oxopentanoic acid, 3-phenyl-3-methyl-2-oxobutanoic acid, 3-phenyl-2-oxohexanoic acid, 3-phenyl-2-oxoheptanoic acid, 3-phenyl-2-oxooctanoic acid, 3-phenyl-2-oxononanoic acid, 3-phenyl-4-methyl-2-oxopentanoic acid, 3-phenyl-5-methyl-2-oxohexanoic acid, 3-phenyl-4-methyl-2-oxohexanoic acid, 3-phenyl-3-methyl-2-oxopentanoic acid, 3-phenyl-3-ethyl-2-oxopentanoic acid, 3-phenyl-3-pentyl-2-oxooctanoic acid, 3-phenyl-3-methyl-2-oxononanoic acid, 3-phenyl-3-butyl-2-oxoheptanoic acid, 3-phenyl-3-hexyl-2-oxononanoic acid, 3-phenyl-2-oxoundecanoic acid and 3-phenyl-3-octylundecanoic acid. Other exemplary leaving groups are 3-(p-carboxyphenyl)-2-oxobutanoic acid and 3-(p-carboxyphenyl)-3-methyl-2-oxobutanoic acid that have a carboxyl group on the phenyl ring, as well as 3-aryl-2-oxoalkanoic acids that have these carboxyl groups converted to a sodium salt, a potassium salt or a quaternary ammonium salt.

The 3-aryl-2-oxoalkanoic acids described above can be easily synthesized by known procedures (see, for example, Japanese Patent Publication Nos. 35068/1978 and 35069/1978, and Japanese Patent Public Disclosure Nos. 149970/1978 and

99445/1981).

The platinum coordination compounds of the present invention which are represented by the general formula (1) may be produced by the method described below. Namely, they can be produced by reacting a platinum dihydroxo complex of the formula (2):

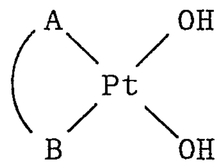

(2)

(where $\widehat{AB}$ has the same meaning as defined above) with a 2-arylalkanoic acid or 3-aryl-2-oxoalkanoic acid of the general formula (3):

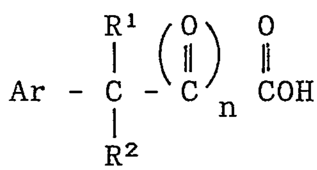

(3)

(where $R^1$ and $R^2$ each independently represents a hydrogen atom or an alkyl group having 1 - 8 carbon atoms, provided that $R^1$ and $R^2$ are not both a hydrogen atom; Ar is an aryl group; and n is 0 or 1).

The platinum (II) complex of the present invention which is represented by the general formula (1) can also be produced by reacting a platinum dinitrato complex of the general formula (4):

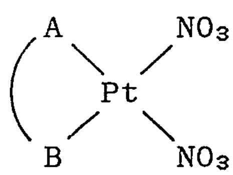

(4)

(where $\widehat{AB}$ has the same meaning as defined above) with the 2-arylalkanoic acid or 3-aryl-2-oxoalkanoic acid of the general formula (3) in the presence of a base. If desired, the 2-arylalkanoic acid or 3-aryl-2-oxoalkanoic acid may be preliminarily reacted with the base to form a metal salt of carboxylic acid represented by the general formula (3'):

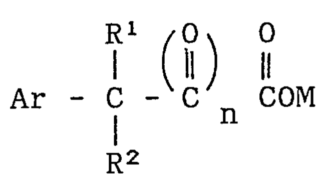

(3')

(where Ar, $R^1$ and $R^2$ have the same meanings as defined above; and M is an alkali metal), which is subsequently reacted with the dinitratoplatinum complex (4) to produce the compound of the present invention which is represented by the general formula (1).

The reactions described above may be performed in a suitable solvent. A preferred solvent is water but, if desired, the reactions may be performed in a mixed solvent system consisting of water and a solvent such as alcohol, acetone, acetonitrile or tetrahydrofuran that mix thoroughly uniformly with water. The reaction temperature may be low but it may be increased to higher levels, provided the product complex will not decompose. The reaction time can be shortened by performing the reaction at suitably elevated temperatures in the range of from about 30 to 60 °C.

Among the compounds (1) of the present invention that are produced by the procedures described above is included a complex that has two leaving arylpyruvato groups each having a carboxyl group on the phenyl ring and which is represented by the general formula (1'):

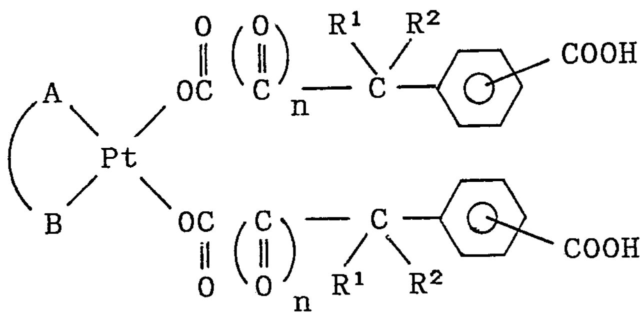

(1')

where $\widehat{AB}$, $R^1$, $R^2$ and n have the same meanings as defined above. This complex may be reacted either with an alkali metal hydroxide such as sodium hydroxide or potassium hydroxide or with an amine to produce a water-soluble platinum (II) complex that has an alkali metal salt or quaternary ammonium salt of carboxylic acid on each phenyl ring and which is represented by the general formula (1"):

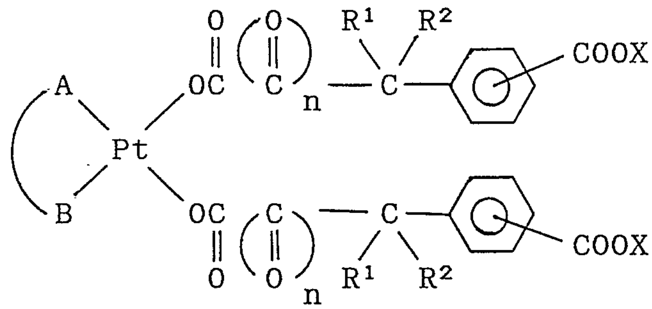

(1")

where $\widehat{AB}$, $R^1$, $R^2$ and n have the same meanings as defined above. This platinum (II) complex represented by the general formula (1") is also included within the scope of the compounds of the present invention. The reaction for producing this compound is preferably carried out in a suitable solvent. For rapid progress of the reaction, it is particularly preferred to use as a solvent an aqueous solution or a mixed solvent system compositing of water and an organic solvent that thoroughly mixes with water. Amines that may be used as solvents are not limited to any particular types and both aliphatic and aromatic amines may be used irrespective of whether they are primary, secondary or tertiary.

The processes described above can be practiced in a very simple manner and the platinum (1I) complexes of the present invention can be readily produced by these processes not only in high yields but also with such a high purity that the product complexes need no further refinement.

The platinum (II) complexes of the present invention may be immediately used as substances having antitumor activity after they are produced in various solvents. If necessary, they may be isolated from the solvents before use.

When the starting platinum complex (2) or (4) is to be reacted with the carboxylic acid derivative (3), the latter is preferably used in amounts ranging from 2 to 3 moles per mole of the complex (2) or (4). When the dinitratoplatinum complex (4) is to be reacted with the carboxylic acid derivative (3) or (3'), the latter is preferably used in an amounts ranging from 2 to 3 moles per mole of the complex (4). The reaction between the complex (4) and the 2-arylalkanoic acid or 3-aryl-2-oxoalkanoic acid

(3) must be performed in the presence of a base. Useful bases include inorganic bases such as sodium hydroxide, potassium hydroxide, lithium hydroxide, sodium carbonate and potassium carbonate, as well as alkali metal alkoxides such as sodium methoxide, sodium ethoxide and potassium methoxide. The bases are preferably used in amounts ranging from 1 to 2 moles per mole of the 2-arylalkanoic acid or 3-aryl-2-oxoalkanoic acid (3).

The starting platinum complexes (2) and (4) may be prepared by known procedures such as those described in Japanese Patent Public Disclosure No. 31648/1978 and Japanese Patent Publication No. 500849/1981.

Typical examples of the platinum complex compounds of the present invention are listed in Table 1.

Table 1

Novel Platinum (II) Complexes

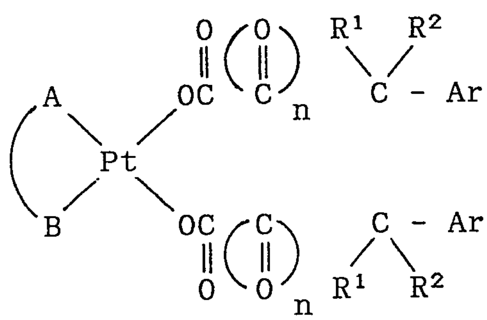

(1)

| Compound No. | Compound name | Example No. |
|---|---|---|
| 1 | bis{(+)-2-(6'-methoxy-β-naphthyl)propionato}-(trans-ℓ-1,2-diaminocyclohexane)platinum (11) | 1, 3 |
| 2 | bis{(+)-2-(6'-methoxy-β-naphthyl)propionato}-(trans-d,ℓ-(1,2-diaminocyclohexane)platinum (1I) | 4 |
| 3 | bis{(+)-2-(6'-methoxy-β-naphthyl)propionato}-(ethylendiamine)platinum (II) | 5 |
| 4 | bis(2-phenylpropionato)(trans-ℓ-1,2-diaminocyclohexane)platinum (II) | 6 |
| 5 | bis{2-(p-isobutylphenyl)propionato}(trans-ℓ-1,2-diaminocyclohexane)platinum (II) | 2, 7 |

Table 1 (cont'd)

| Compound No. | Compound name | Example No. |
|---|---|---|
| 6 | bis{2-(p-propylphenyl)propionato}(trans-ℓ-1,2-diaminocyclohexane)platinum (II) | 8 |
| 7 | bis{2-(p-isobutylphenyl)propionato}(1,2-diaminocyclohexane)platinum (II) | 9 |
| 8 | bis{2-(p-fluorophenyl)propionato}(trans-ℓ-1,2-diaminocyclohexane)platinum (II) | 10 |
| 9 | bis{2-(m-methylphenyl)propionato}(trans-ℓ-1,2-diaminocyclohexane)platinum (II) | 11 |
| 10 | bis(2-phenylbutyrato)(trans-ℓ-1,2-diaminocyclohexane)platinum (II) | 12 |
| 11 | bis(β-methylphenylpyruvato)(trans-ℓ-1,2-diaminocyclohexane)platinum (II) | 13, 15, 16 |
| 12 | bis{β-methyl(p-fluorophenylpyruvato)}(trans-ℓ-1,2-diaminocyclohexane)platinum (II) | 14 |
| 13 | bis{β-methyl(p-cyclohexylphenylpyruvato)}-(trans-ℓ-1,2-diaminocyclohexane)platinum (II) | 17 |
| 14 | bis{β-methyl(p-isobutylphenylpyruvato)}(trans-ℓ-1,2-diaminocyclohexane)platinum (II) | 18 |
| 15 | bis{β-methylphenylpyruvato)(trans-d,ℓ-1,2-diaminocyclohexane)platinum (II) | 19 |
| 16 | bis{β-methyl(p-isobutylphenylpyruvato)}(trans-d,ℓ-1,2-diaminocyclohexane)platinum (II) | 20 |
| 17 | bis(β-methylphenylpyruvato)ethylenediamine platinum (II) | 21 |
| 18 | bis{β-methyl(p-fluorophenylpyruvato)}ethylene-diamine platinum (II) | 22 |
| 19 | bis{β-methyl(p-isobutylphenylpyruvato)}-ethylenediamine platinum (II) | 23 |
| 20 | bis{β-methyl(p-methylphenylpyruvato)}(trans-ℓ-1,2-diaminocyclohexane)platinum (II) | 24 |
| 21 | bis{β-methyl(p-methoxyphenylpyruvato)}(trans-ℓ-1,2-diaminocyclohexane)platinum (II) | 25 |
| 22 | bis{β-methyl(p-propylphenylpyruvato)}(trans-ℓ-1,2-diaminocyclohexane)platinum (II) | 26 |

Table 1 (cont'd)

| Compound No. | Compound name | Example No. |
|---|---|---|
| 23 | bis{β-methyl(p-phenoxyphenylpyruvato)}(trans-ℓ-1,2-diaminocyclohexane)platinum (II) | 27 |
| 24 | bis{β-methyl(m-methylphenylpyruvato)}(trans-ℓ-1,2-diaminocyclohexane)platinum (II) | 28 |
| 25 | bis(β-ethylphenylpyruvato)(trans-ℓ-1,2-diaminocyclohexane)platinum (II) | 29 |
| 26 | bis(β-isobutylphenylpyruvato)(trans-ℓ-1,2-diaminocyclohexane)platinum (II) | 30 |
| 27 | bis(β-hexylphenylpyruvato)(trans-ℓ-1,2-diaminocyclohexane)platinum (II) | 31 |
| 28 | bis(β,β-dimethylphenylpyruvato)(trans-ℓ-1,2-diaminocyclohexane)platinum (II) | 32 |
| 29 | bis{β-methyl(p-carboxyphenylpyruvato)}(trans-ℓ-1,2-diaminocyclohexane)platinum (II) | 33 |
| 30 | bis{β-methyl(p-carboxyphenylpyruvato)}(trans-d,ℓ-1,2-diaminocyclohexane)platinum (II) | 34 |
| 31 | bis{β,β-dimethyl(p-carboxyphenylpyruvato)}-(trans-ℓ-1,2-diaminocyclohexane)platinum (II) | 35 |
| 32 | bis{β-methyl(p-carboxyphenylpyruvato)}(trans-ℓ-1,2-diaminocyclohexane)platinum (II) disodium salt | 36 |
| 33 | bis{β-methyl(p-carboxyphenylpyruvato)}(trans-d,ℓ-1,2-diaminocyclohexane)platinum (II) bis(dimethylammonium) salt | 37 |

The platinum (II) complexes of the present invention have a growth suppressing activity on mouse leukemia tumor cells P-338. For example, bis{(+)-2-(6'-methoxy-β-naphthyl)propionato}(trans-ℓ-1,2-diaminocyclohexane)platinum (Compound No. 1) which is one of the platinum (II) complexes of the present invention is capable of 50% suppression of the growth of mouse tumor cells P-388 at a concentration of 0.011 μg/ml. Some of the platinum (II) complexes of the present invention have a stronger antitumor activity than cisplatin and hence are anticipated to prove useful as an

alternative to cisplatin which is one of the substances known today to have pronounced antitumor activity.

The platinum (II) complexes of the present invention have low levels of toxicity. For example, bis{β-methyl(p-isobutylphenylpyruvato)}(trans-ℓ-1,2-diaminocyclohexane)platinum (Compound No. 14) did not cause any appreciable increase in either S-GPT (serum transaminase) or BUN (blood urea nitrogen), thus showing that said compound was considerably low in both hepato-toxicity and nephrotoxicity.

MODES FOR CARRYING OUT THE INVENTION:

The following working examples and pharmacological test example are given to further illustrate the present invention. The melting points of the novel platinum (II) complexes prepared in the working examples and the data of elemental analyses conducted on these complexes are shown in Table 2. The data of NMR and 1R spectral analyses conducted on the same complexes are shown in Table 3.

Example 1

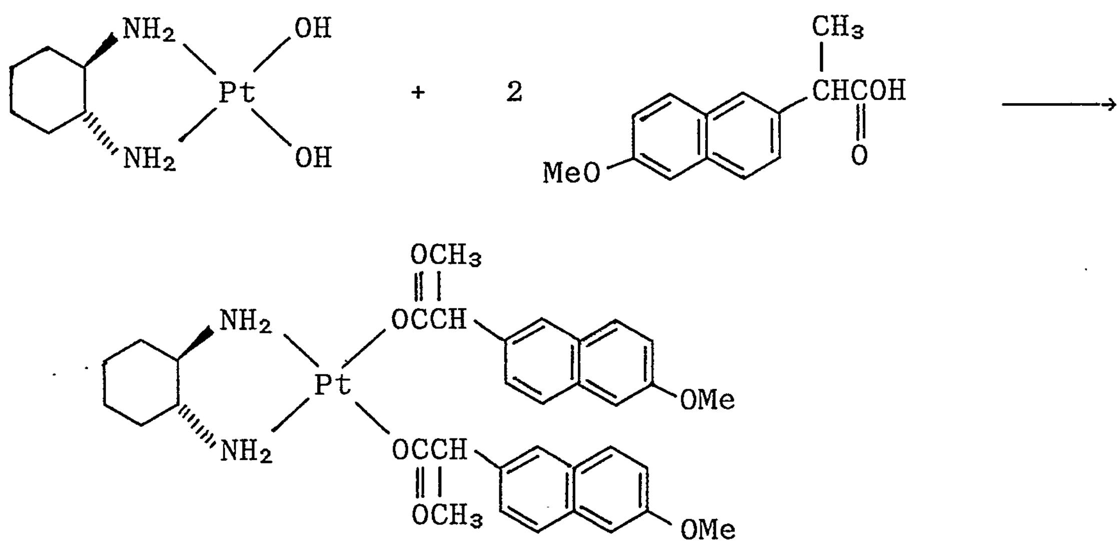

An aqueous solution of silver nitrate (340 mg, 1.0 mmol) was added to dichloro(trans-ℓ-1,2-diaminocyclohexane)platinum (II) (380 mg, 2.0 mmol) and the mixture was stirred in the absence of light at 60°C for 3 hours. The silver chloride precipitate was filtered off and an aqueous solution of 1% potassium chloride was added to the filtrate, with the precipitating silver chloride being

filtered off. The filtrate in aqueous solution containing dinitrato(trans-ℓ-1,2-diaminocyclohexane)platinum (II) was concentrated under vacuum. Upon addition of ethanol to the concentrate, the white solid precipitate of dinitrato-platinum (11) complex was isolated by filtration. The isolated complex (215 mg, 0.50 mmol) was dissolved in 30 ml of water and the solution was passed through a column packed with a $OH^-$ form ion-exchange resin (Amberlite IRA-400 of Cl-form that was converted to $OH^-$ form by means of 3 N aqueous solution hydroxide at 50 - 60°C), to thereby obtain an aqueous solution of dihydroxo(trans-ℓ-1,2-diaminocyclohexane)platinum (II) complex (ca. 150 ml). To this aqueous solution, (+)-2-(6'-methoxy-β-naphthyl)propionic acid (253 mg, 1.10 mmol) was added and the mixture was stirred at room temperature for 3 hours. After completion of the reaction, the precipitating bis{(+)-2-(6'-methoxy-β-naphthyl)propionato}(trans-ℓ-1,2-diaminocyclohexane)platinum (11) (Compound No. 1) was isolated by filtration, washed with water and dried under vacuum. The yield of Compound No. 1 was 52% on the basis of dinitratoplatinum (II) complex.

Example 2

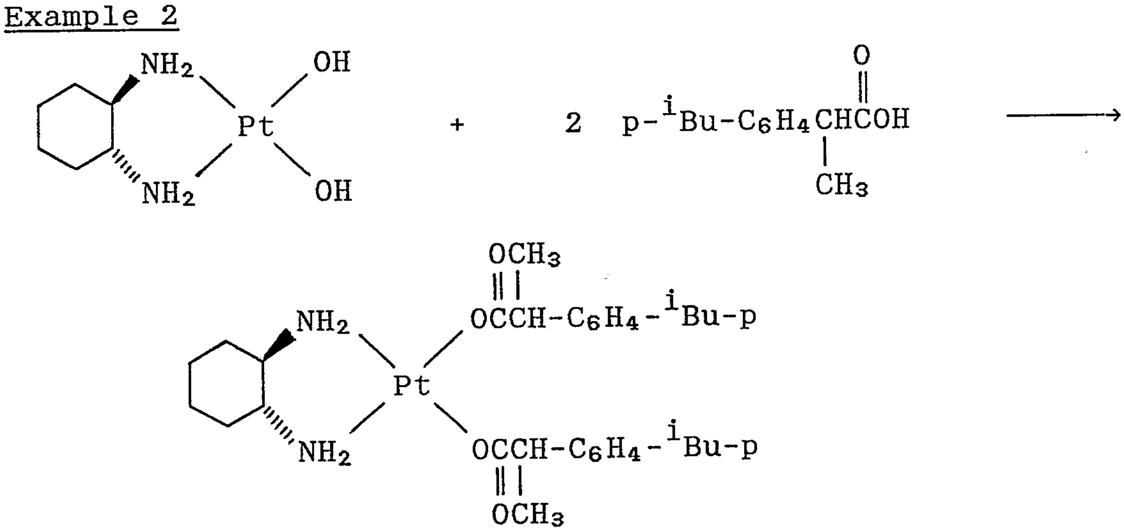

As in Example 1, dinitrato(trans-ℓ-1,2-diaminocyclohexane)platinum (II) (215 mg, 0.50 mmol) was converted to dihydroxo(trans-ℓ-1,2-diaminocyclohexane)platinum (II). To an aqueous solution of this compound (150 ml), 2-(p-isobutylphenyl)propionic

acid (246 mg, 1.25 mmol) was added and the mixture was stirred at room temperature for 6 hours. After completion of the reaction, the precipitating bis{2-(p-isobutylphenyl)propionato}(trans-ℓ-1,2-diaminocyclohexane)platinum (II) (Compound No. 5) was isolated by filtration, washed with water and dried under vacuum. The yield of Compound No. 5 was 69% on the basis of the dinitratoplatinum (II) complex.

Example 3

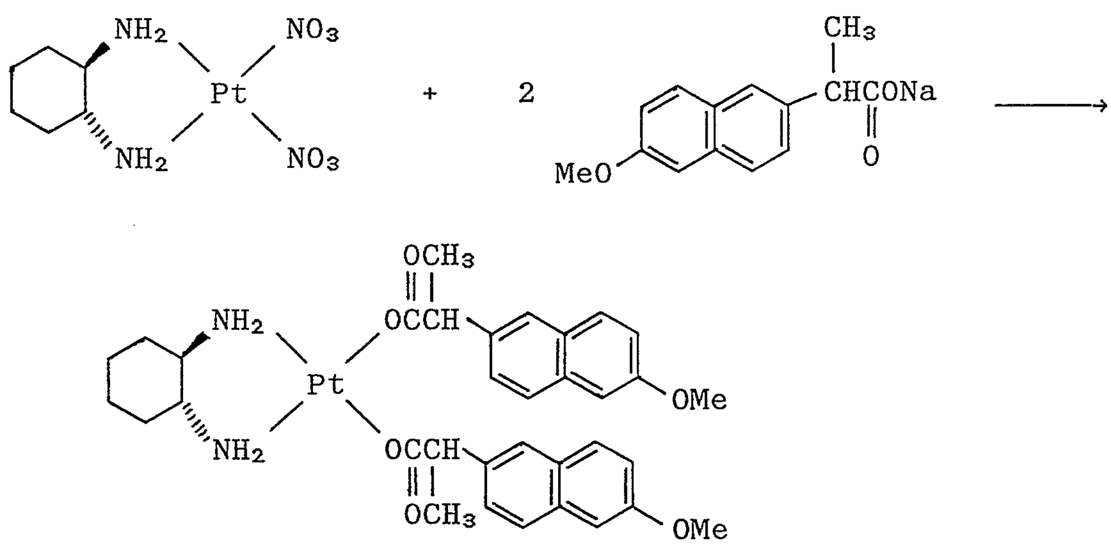

Dinitrato(trans-ℓ-1,2-diaminocyclohexane)platinum (II) (200 mg, 0.46 mmol) was dissolved in water (30 ml). To the resulting solution, an aqueous solution of (+)-2-(6'-methoxy-β-naphthyl)propionic acid (230 mg, 1.00 mmol) and an aqueous solution of 1 N sodium hydroxide (1.0 ml) were added and the mixture was stirred at room temperature for 6 hours. After completion of the reaction, the precipitating bis{(+)-2-(6'-methoxy-β-naphthyl)propionato}(trans-ℓ-1,2-diaminocyclohexane)platinum (II) (Compound No. 1) was isolated by filtration, washed with water and dried under vacuum. The yield of Compound No. 1 was 56% on the basis of the dinitratoplatinum (II) complex.

Example 4

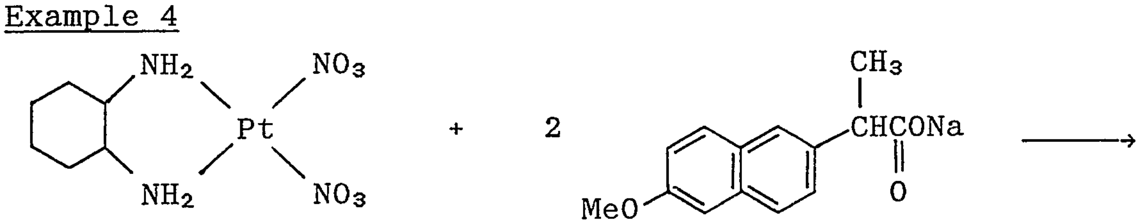

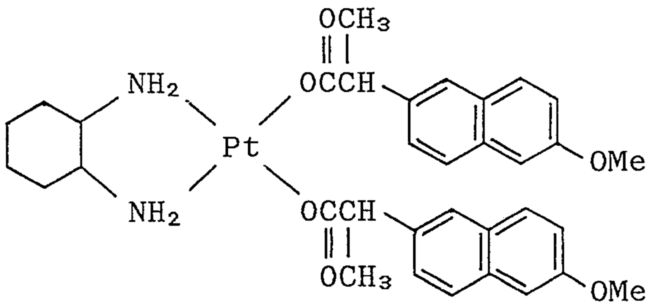

An aqueous solution of dinitrato(trans-d,ℓ-1,2-diaminocyclohexane)platinum (II) (24 mg, 0.055 mmol) was prepared from dichloro(1,2-diaminocyclohexane)platinum (II). To this aqueous solution, a sodium salt of (+)-2-(6'-methoxy-β-naphthyl)propionic acid (30 mg, 0.12 mmol) was added and the mixture was stirred at room temperature for 4 hours. After completion of the reaction, the precipitating bis{(+)-2-(6'-methoxy-β-naphthyl)propionato}(trans-d,ℓ-1,2-diaminocyclohexane)platinum (II) (Compound No. 2) was isolated by filtration, washed with water and dried under vacuum. The yield of Compound No. 2 was 40% on the basis of the dinitratoplatinum (II) complex.

<u>Example 5</u>

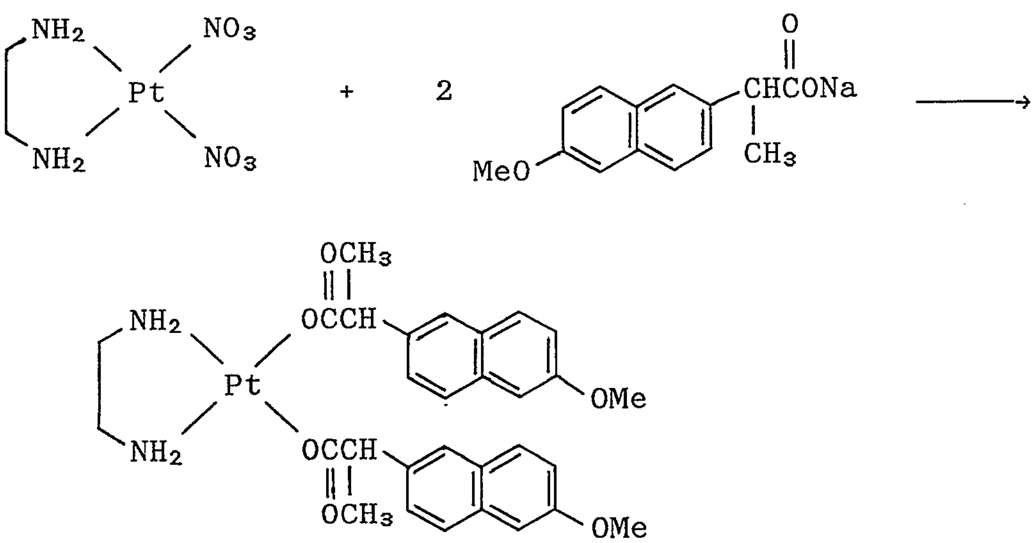

As in Example 1, an aqueous solution of dinitrato(ethylenediamine)platinum (Il) (200 mg, 0.53 mmol) was prepared from dichloro(ethylenediamine)platinum complex. To this aqueous solution, a sodium salt of (+)-2-(6'-methoxy-β-nathphyl)propionic acid (266 mg, 1.05 mmol) was added and the mixture was stirred at room temperature

for 6 hours. After completion of the reaction, the precipitating bis{(+)-2-(6'-methoxy-β-naphthyl)propionato}(ethylenediamine)platinum (II) (Compound No. 3) was isolated by filtration, washed with water and dried under vacuum. The yield of Compound No. 3 was 41% on the basis of the dinitratoplatinum (II) complex.

Example 6

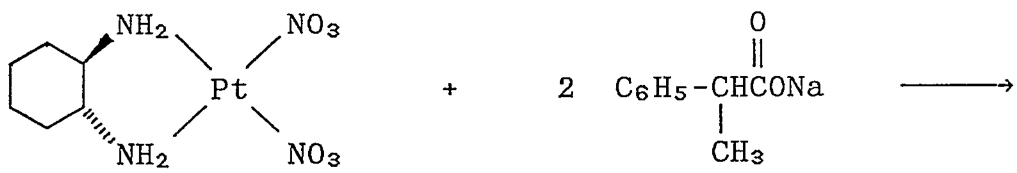

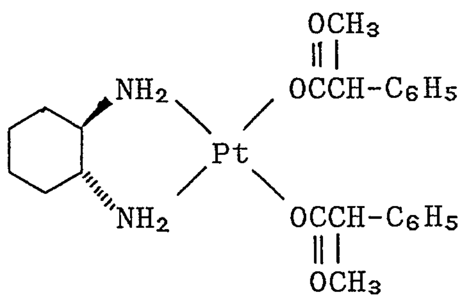

A sodium salt of 2-phenylpropionic acid (159 mg, 0.92 mmol) was added to an aqueous solution of dinitrato(trans-ℓ-1,2-diaminocyclohexane)platinum (II) (200 mg, 0.46 mmol) and the mixture was stirred at room temperature for 6 hours. After completion of the reaction, the precipitating bis(2-phenylpropionato)(trans-ℓ-1,2-diaminocyclohexane)platinum (II) (Compound No. 4) was isolated by filtration, washed with water and dried under vacuum. The yield of Compound No. 4 was 73% on the basis of the dinitratoplatinum (II) complex.

Example 7

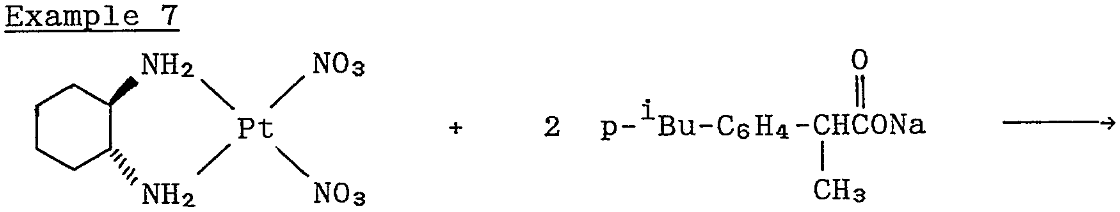

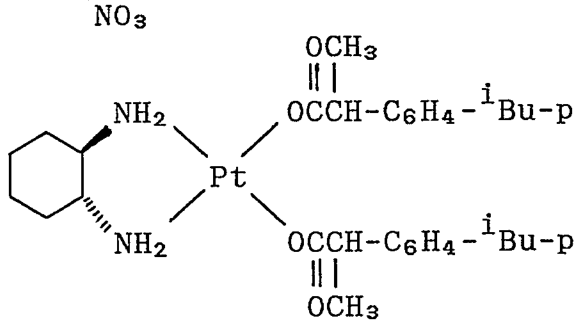

A sodium salt of 2-(p-isobutylphenyl)propionic acid (117 mg, 0.51 mmol) was added to an aqueous solution of dinitrato(trans-ℓ-1,2-diaminocyclohexane)platinum (II) (100 mg, 0.23 mmol) and the resulting mixture was stirred at room temperature for 6 hours. After completion of the reaction, the precipitating bis{2-(p-isobutylphenyl)propionato}(trans-ℓ-1,2-diaminocyclohexane)platinum (II) (Compound No. 5) was isolated by filtration, washed with water and dried under vacuum. The yield of Compound No. 5 was 96% on the basis of the dinitratoplatinum (II) complex.

Example 8

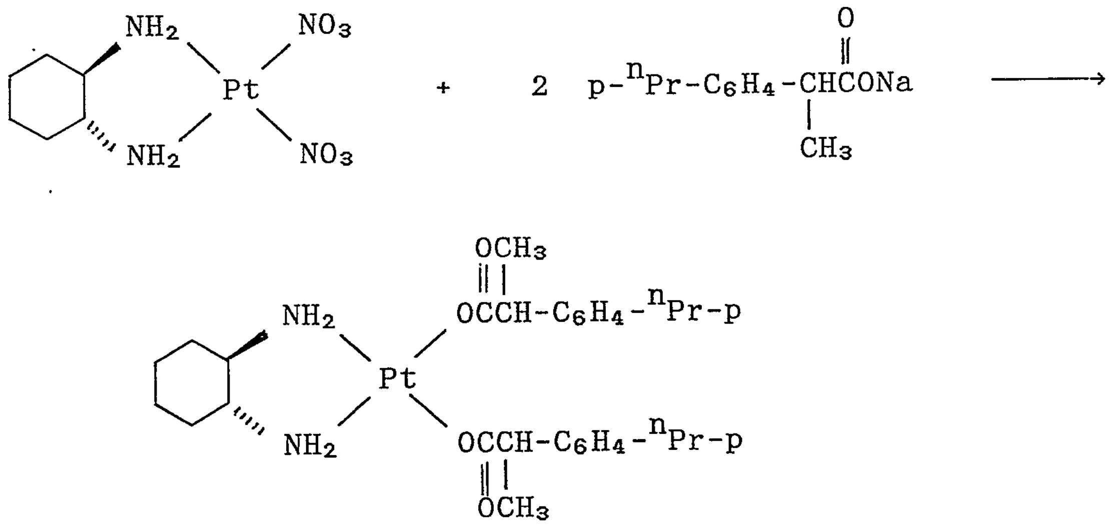

A sodium salt of 2-(p-propylphenyl)propionic acid (198 mg, 0.92 mmol) was added to an aqueous solution of dinitrato(trans-ℓ-1,2-diaminocyclohexane)platinum (II) (200 mg, 0.46 mmol) and the resulting mixture was stirred at room temperature for 6 hours. After completion of the reaction, the precipitating bis{2-(p-propylphenyl)propionato}(trans-ℓ-1,2-diaminocyclohexane)platinum (II) (Compound No. 6) was isolated by filtration, washed with water and dried under vacuum. The yield of Compound No. 6 was 65% on the basis of the dinitratoplatinum (II) complex.

Example 9

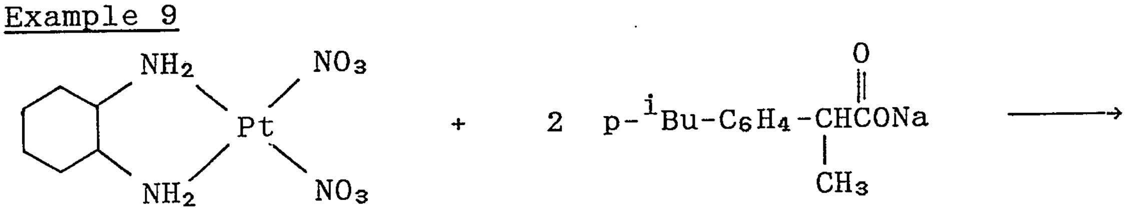

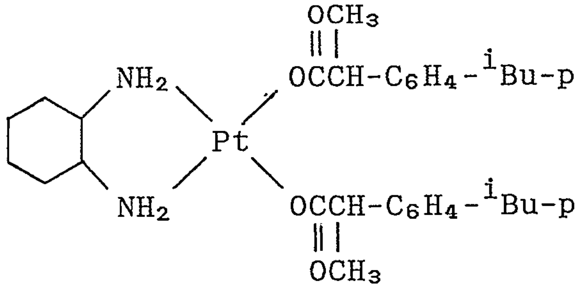

A sodium salt of 2-(p-isobutylphenyl)propionic acid (74 mg, 0.32 mmol) was added to an aqueous solution of dinitrato(1,2-diaminocyclohexane)platinum (lI) (50 mg, 0.115 mmol) and the resulting mixture was stirred at room temperature for 5 hours. After completion of the reaction, the precipitating bis{2-(p-isobutylphenyl)propionato}(1,2-diaminocyclohexane)pIatinum (II) (Compound No. 7) was isolated by filtration, washed with water and dried under vacuum. The yield of Compound No. 7 was 87% on the basis of the dinitratoplatinum (II) complex.

Example 10

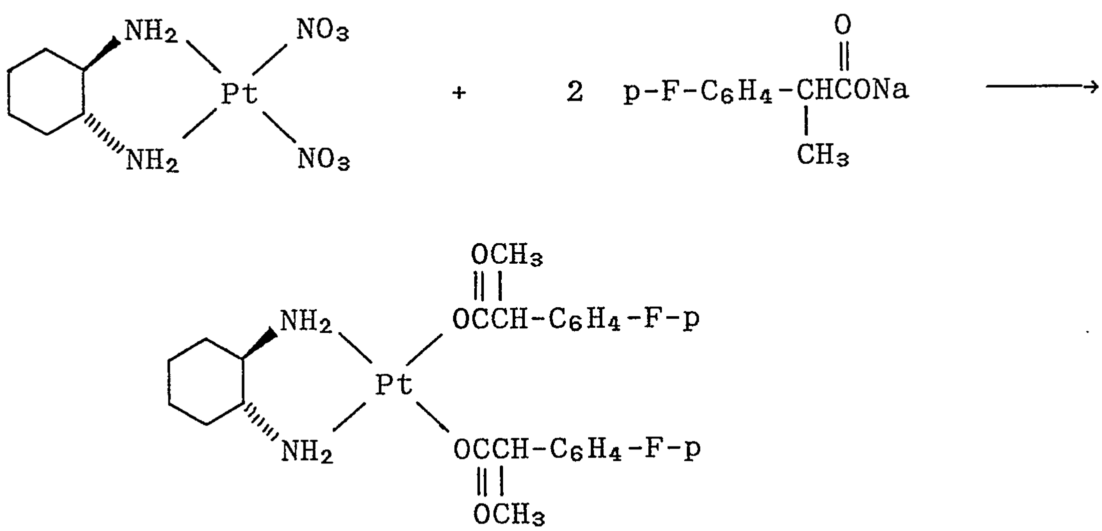

A sodium salt of 2-(p-fluorophenyl)propionic acid (176 mg, 0.93 mmol) was added to an aqueous solution of dinitrato(trans-ℓ-1,2-diaminocyclohexane)platinum (II) (200 mg, 0.46 mmol) and the resulting mixture was stirred at room temperature for 12 hours. After completion of the reaction, the precipitating bis{2-(p-fluorophenyl)propionato)}(trans-ℓ-1,2-diaminocyclohexane)platinum (lI) (Compound No. 8) was isolated by filtration, washed with water and dried under vacuum. The yield of Compound No. 8 was 66% on the basis of

the dinitratoplatinum (II) complex.

Example 11

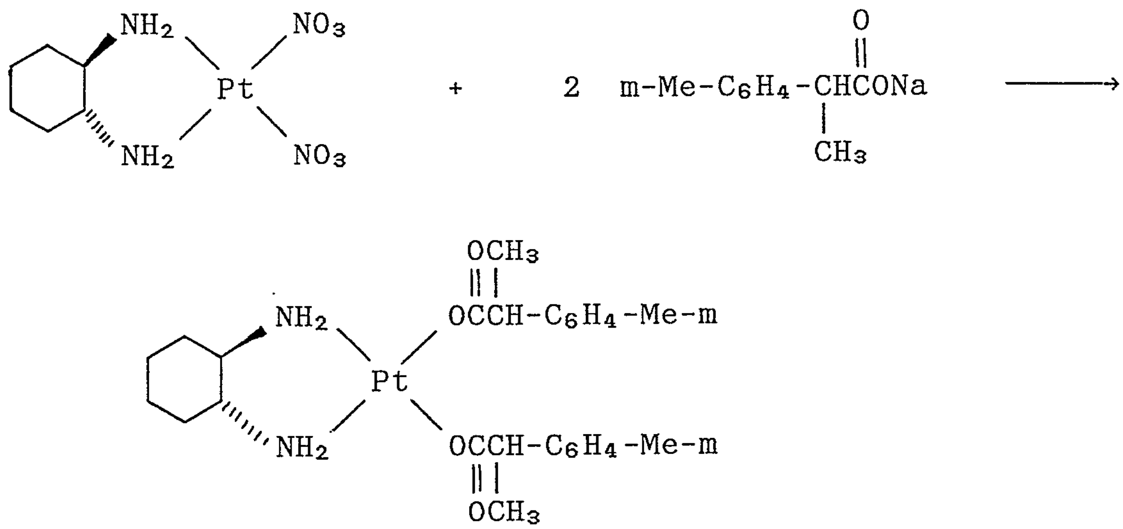

A sodium salt of 2-(m-methylphenyl)propionic acid (172 mg, 0.92 mmol) was added to an aqueous solution (30 ml) of dinitrato(trans-ℓ-1,2-diaminocyclohexane)platinum (II) (200 mg, 0.46 mmol) and the resulting mixture was stirred at room temperature for 12 hours. After completion of the reaction, the precipitating bis{2-(m-methylphenyl)propionato}(trans-ℓ-1,2-diaminocyclohexane)platinum (II) (Compound No. 9) was isolated by filtration, washed with water and dried under vacuum. The yield of Compound No. 9 was 71% on the basis of the dinitratoplatinum (Il) complex.

Example 12

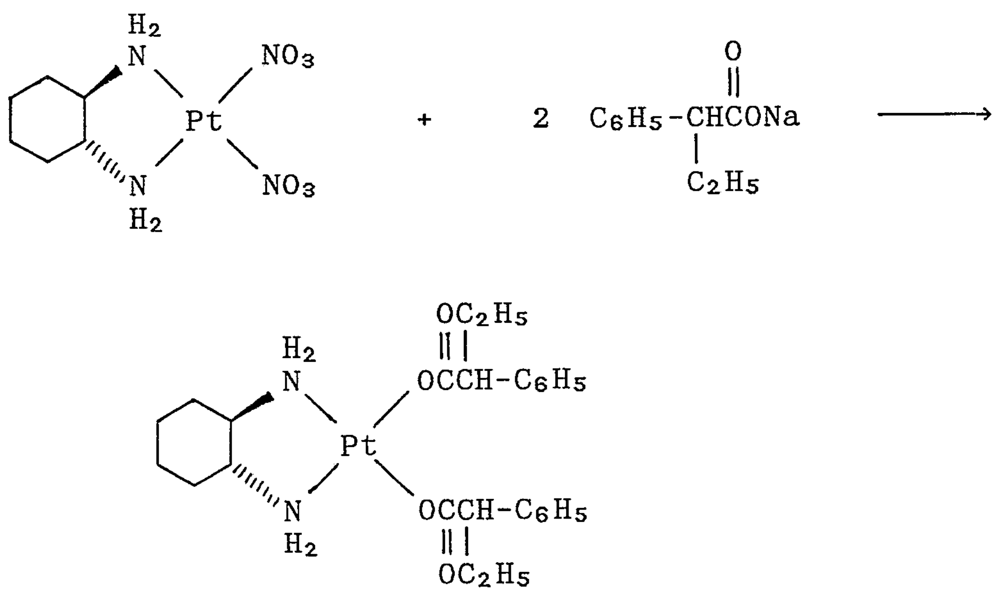

A sodium salt of 2-phenylbutanoic acid (400 mg, 2.15 mmol) was added to an aqueous solution (60 ml) of dinitrato(trans-ℓ-1,2-diaminocyclohexane)platinum (II) (433 mg, 1.00 mmol) and the resulting mixture was stirred at room temperature for 12 hours. After completion of the reaction, the precipitating bis(2-phenylbutylato)(trans-ℓ-1,2-diaminocyclohexane)platinum (II) (Compound No. 10) was isolated by filtration, washed with water and dried under vacuum. The yield of Compound No. 10 was 47.6% on the basis of the dinitratoplatinum (II) complex.

Example 13

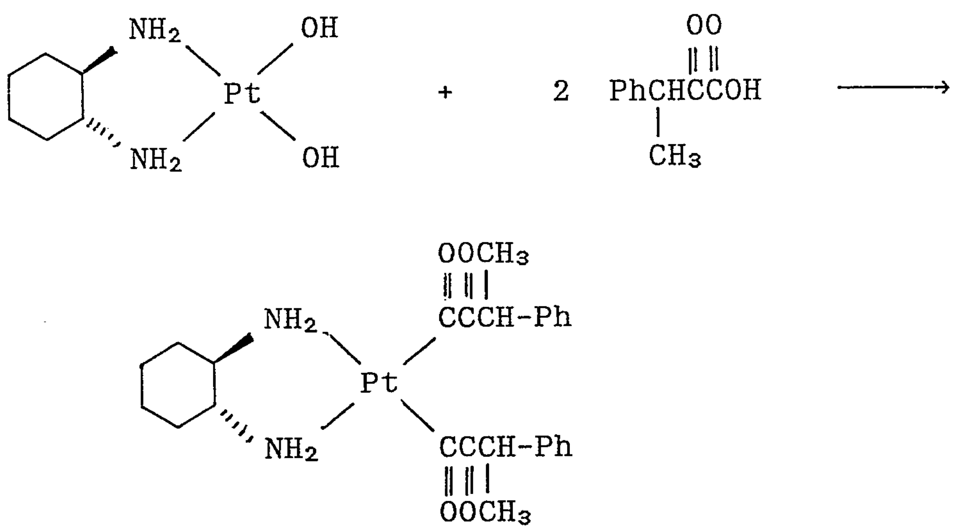

Dinitrato(trans-ℓ-1,2-diaminocyclohexane)platinum (II) (215 mg, 0.50 mmol) was converted to dihydroxo(trans-ℓ-1,2-diaminocyclohexane)platinum (II). To an aqueous solution (150 ml) of this compound, 3-phenyl-2-oxobutanoic acid (225 mg, 1.26 mmol) was added and the resulting mixture was stirred at room temperature for 3 hours. After completion of the reaction, the precipitating bis(β-methylphenylpyruvato)(trans-ℓ-1,2-diaminocyclohexane)platinum (II) (Compound No. 11) was isolated by filtration, washed with water and dried under vacuum. The yield of Compound No. 11 was 61% on the basis of the dinitratoplatinum (II) complex.

Example 14

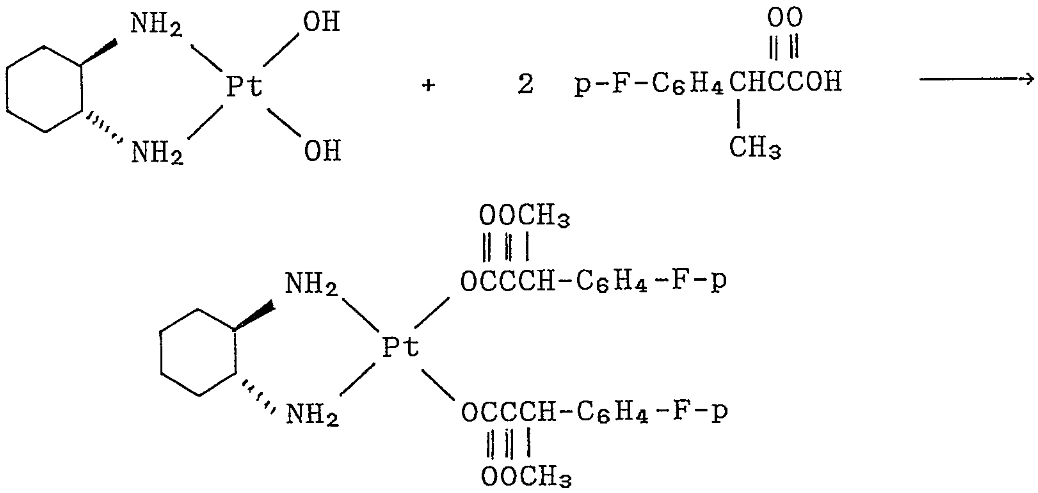

Dinitrato(trans-ℓ-1,2-diaminocyclohexane)platinum (II) (215 mg, 0.50 mmol) was converted to dihydroxo(trans-ℓ-1,2-diaminocyclohexane)platinum (II). To an aqueous solution (150 ml) of this compound, 3-(p-fluorophenyl)-2-oxobutanoic acid (246 mg, 1.25 mmol) was added and the resulting mixture was stirred at room temperature for 6 hours. After completion of the reaction, the precipitating bis{β-methyl(p-fluorophenylpyruvato)}(trans-ℓ-1,2-diaminocyclohexane)platinum (II) (Compound No. 12) was isolated by filtration, washed with water and dried under vacuum. The yield of Compound No. 12 was 69% on the basis of the dinitratoplatinum (II) complex.

Example 15

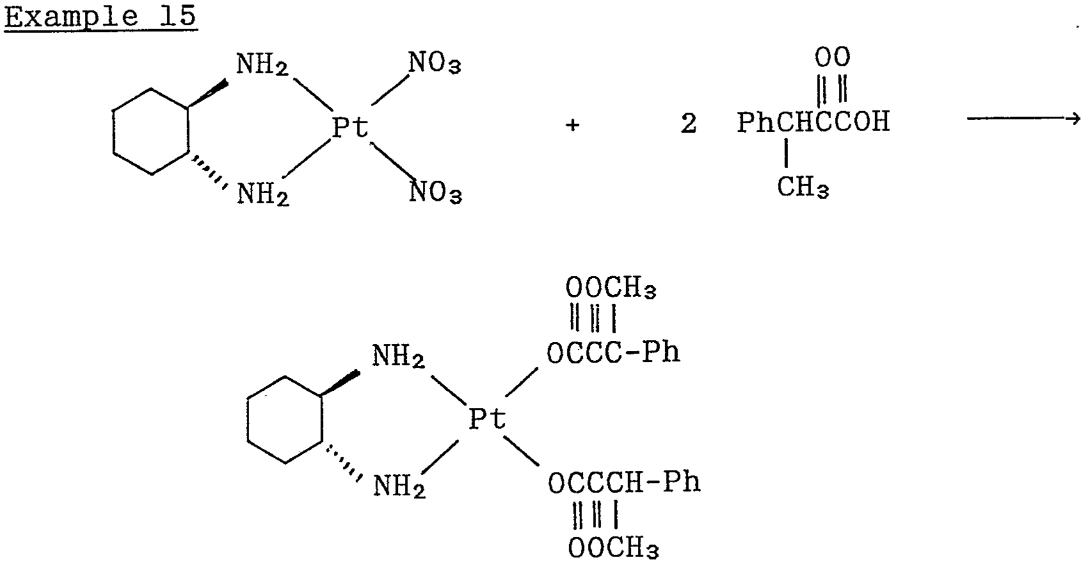

Dinitrato(trans-ℓ-1,2-diaminocyclohexane)platinum (II) (100 mg, 0.23 mmol) was dissolved in water (30 ml). To

the resulting aqueous solution, an aqueous solution (20 ml) of 3-phenyl-2-oxobutanoic acid (93.0 mg, 0.52 mmol) and an aqueous solution (0.6 ml) of 1 N sodium hydroxide were added and the resulting mixture was stirred at room temperature for 6 hours. After completion of the reaction, the precipitating bis(β-methylphenylpyruvato)(trans-ℓ-1,2-diaminocyclohexane)platinum (II) (Compound No. 11) was isolated by filtration, washed with water and dried under vacuum. The yield of Compound No. 11 was 48% on the basis of the dinitratoplatinum (II).

Example 16

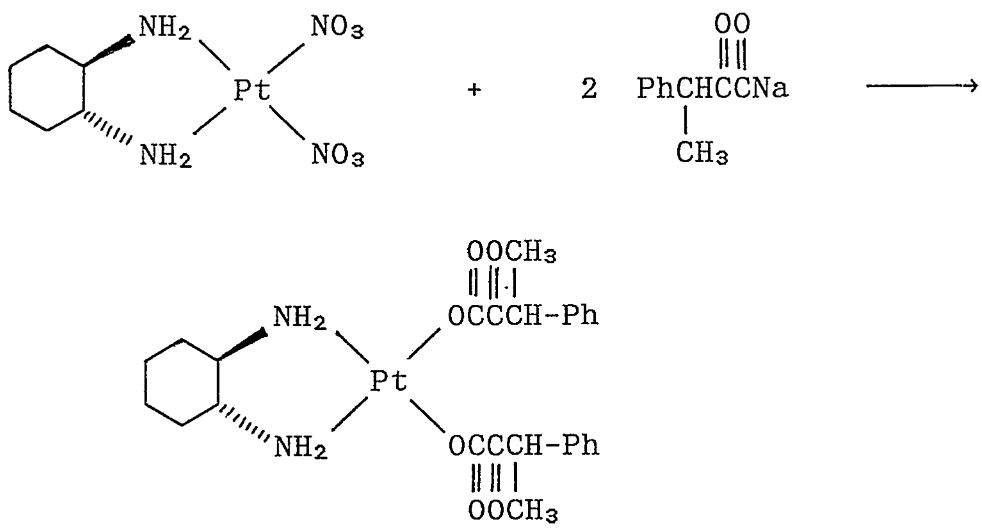

A sodium salt of 3-phenyl-2-oxobutanoic acid (93.0 mg, 0.52 mmol) was added to an aqueous solution of dinitrato(trans-ℓ-1,2-diaminocyclohexane)platinum (II) (100 mg, 0.23 mmol) and the resulting mixture was stirred at room temperature for 6 hours. After completion of the reaction, the precipitating bis(β-methylphenylpyruvato)(trans-ℓ-1,2-diaminocyclohexane)platinum (II) (Compound No. 11) was isolated by filtration, washed with water and dried under vacuum. The yield of Compound No. 11 was 69% on the basis of the dinitratoplatinum (II).

Example 17

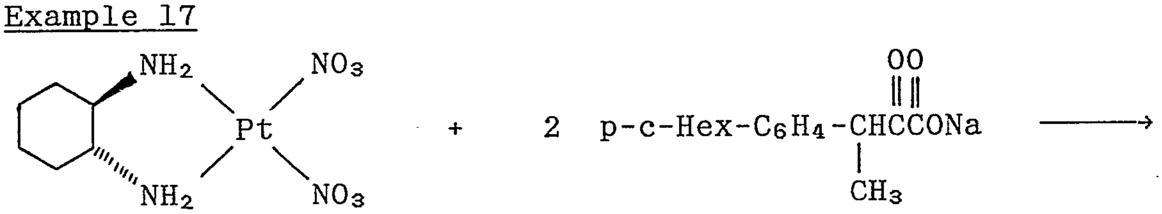

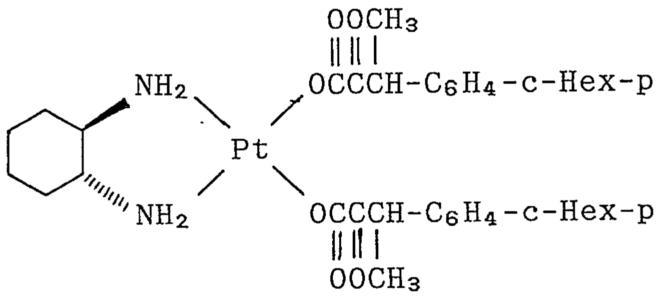

A sodium salt of 3-(p-cyclohexylphenyl)-2-oxobutanoic acid (134 mg, 0.47 mmol) was added to an aqueous solution of dinitrato(trans-ℓ-1,2-diaminocyclohexane)platinum (II) (100 mg, 0.23 mmol) and the resulting mixture was stirred at room temperature for 6 hours. After completion of the reaction, the precipitating bis{β-methyl(p-cyclohexylphenylpyruvato)}(trans-ℓ-1,2-diaminocyclohexane)platinum (II) (Compound No. 13) was isolated by filtration, washed with water and dried under vacuum. The yield of Compound No. 13 was 70% on the basis of the dinitratoplatinum (II).

Example 18

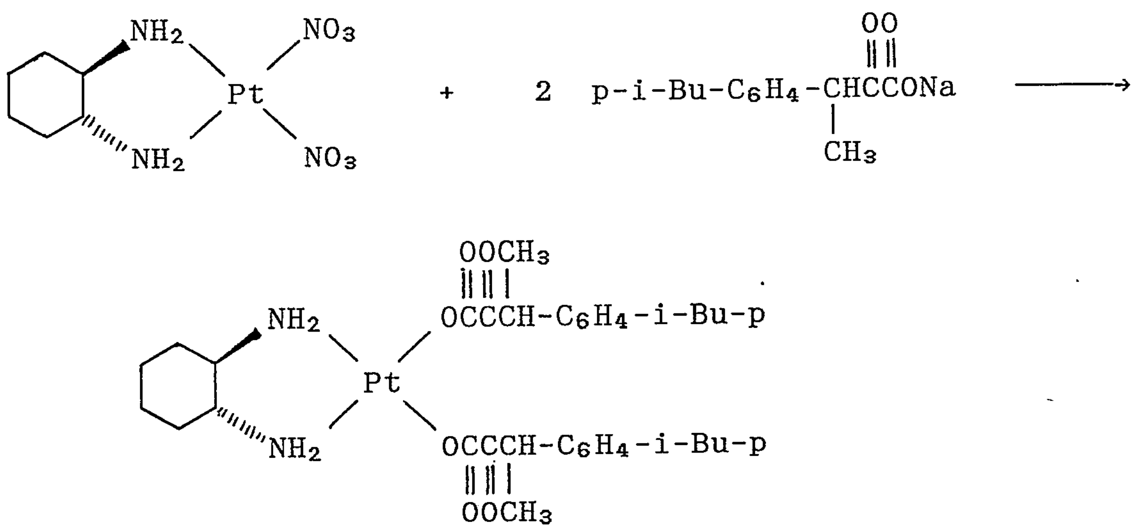

A sodium salt of p-isobutylphenyl-2-oxobutanoic acid (520 mg, 2.03 mmol) was added to an aqueous solution of dinitrato(trans-ℓ-1,2-diaminocyclohexane)platinum (II) (433 mg, 1.0 mmol) and the resulting mixture was stirred at room temperature for 6 hours. After completion of the reaction, the precipitating bis{β-methyl(p-isobutylphenylpyruvato)}(trans-ℓ-1,2-diaminocyclohexane)platinum (II) (Compound No. 14) was

isolated by filtration, washed with water and dried under vacuum. The yield of Compound No. 14 was 79% on the basis of the dinitratoplatinum (II) complex.

Example 19

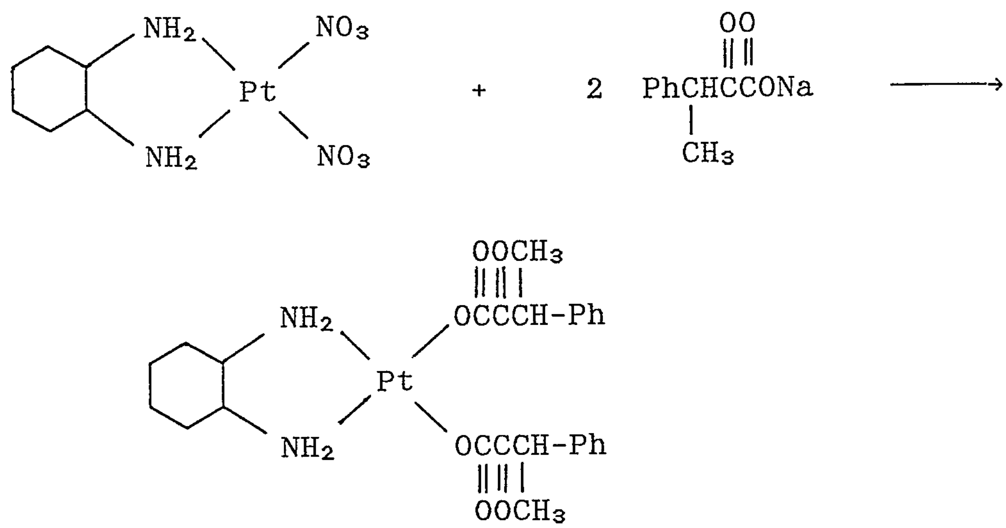

An aqueous solution (50 ml) of a sodium salt of 3-phenyl-2-oxobutanoic acid (150 mg, 0.81 mmol) was added to an aqueous solution (30 ml) of dinitrato(trans-d,ℓ-1,2-diaminocyclohexane)platinum (II) (103 mg, 0.24 mmol) and the resulting mixture was stirred at room temperature for 3 hours. After completion of the reaction, the precipitating bis(β-methylphenylpyruvato)(trans-d,ℓ-1,2-diaminocyclohexane)platinum (II) (Compound No. 15) was isolated by filtration, washed with water and dried under vacuum. The yield of Compound No. 15 was 79% on the basis of the dinitratoplatinum (II).

Example 20

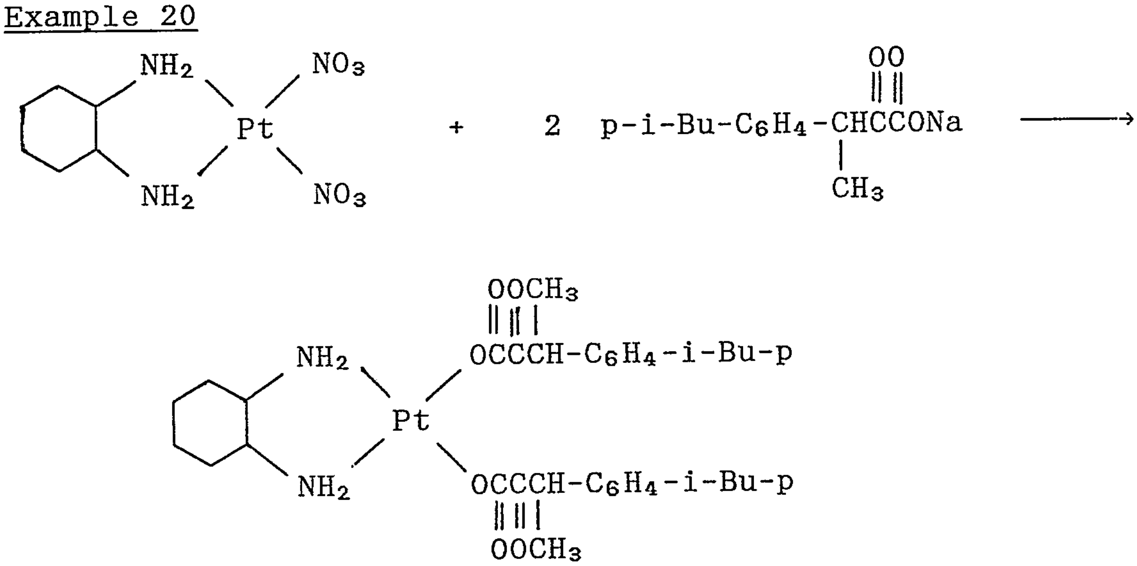

An aqueous solution (50 ml) of sodium 3-(p-isobutylphenyl)-2-oxobutanoate (66.0 mg, 0.24 mmol) was added to an aqueous solution of dinitrato(trans-d,ℓ-1,2-diaminocyclohexane)platinum (II) (50.0 mg, 0.115 mmol) and the resulting mixture was stirred at room temperature for 3 hours. After completion of the reaction, the precipitating bis{(β-methyl(p-isobutylphenylpyruvato)}(trans-d,ℓ-1,2-diaminocyclohexane)platinum (II) (Compound No. 16) was isolated by filtration, washed with water and dried under vacuum. The yield of Compound No. 16 was 76% on the basis of the dinitratoplatinum (II).

<u>Example 21</u>

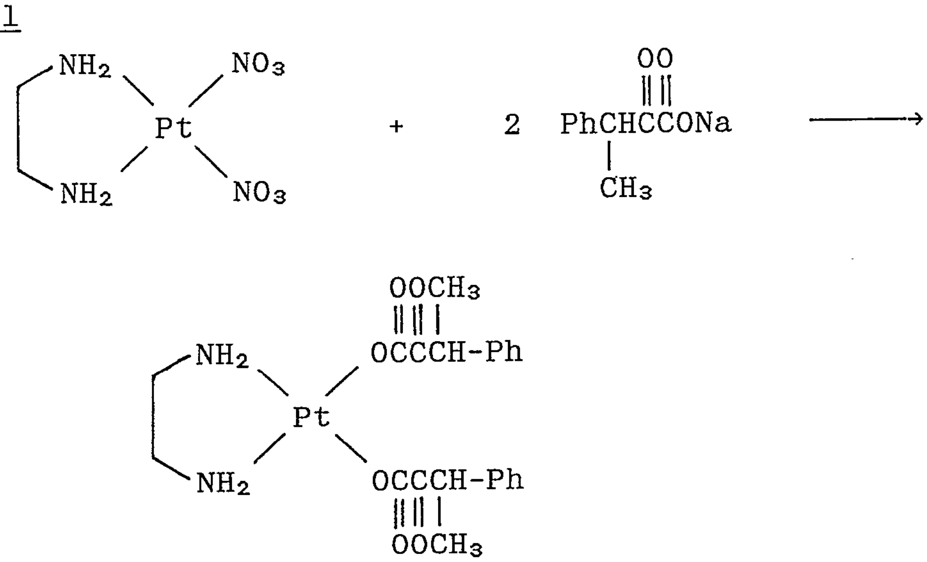

An aqueous solution (50 ml) of a sodium salt of 3-phenyl-2-oxobutanoic acid (106 mg, 0.527 mmol) was added to an aqueous solution (30 ml) of dinitratoethylenediamine platinum (II) (100 mg, 0.264 mmol) and the resulting mixture was stirred at room temperature for 6 hours. After completion of the reaction, the precipitating bis(β-methylphenylpyruvato)ethylenediamine platinum (II) (Compound No. 17) was isolated by filtration, washed with water and dried under vacuum. The yield of Compound No. 17 was 71% on the basis of the dinitratoplatinum (II).

<u>Example 22</u>

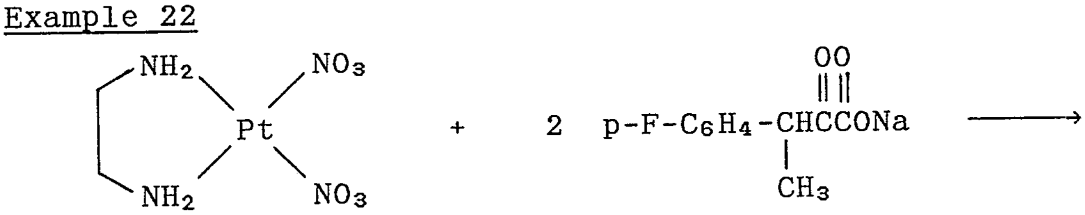

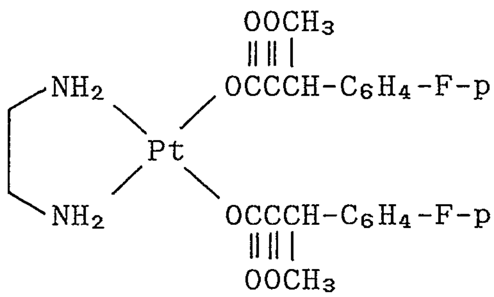

A sodium salt of 3-(p-fluorophenyl)-2-oxobutanoic acid (230 mg, 1.05 mmol) was added to an aqueous solution of dinitratoethylenediamine platinum (II) (200 mg, 0.527 mmol) and the resulting mixture was stirred at room temperature for 6 hours. After completion of the reaction, the precipitating bis{β-methyl(p-fluorophenylpyruvato)}ethylenediamine platinum (II) (Compound No. 18) was isolated by filtration, washed with water and dried under vacuum. The yield of Compound No. 18 was 73% on the basis of the dinitratoplatinum (II).

Example 23

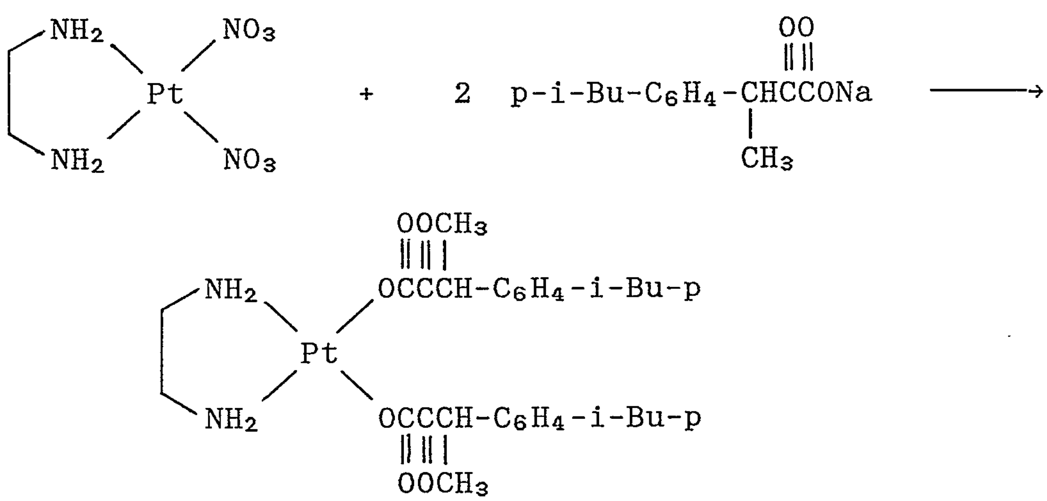

A sodium salt of 3-(p-isobutylphenyl)-2-oxobutanoic acid (500 mg, 1.95 mmol) was added to an aqueous solution (30 ml) of dinitratoethylenediamine platinum (II) (221 mg, 0.583 mmol) and the resulting mixture was stirred at room temperature for 6 hours. After completion of the reaction, the precipitating bis{β-methyl(p-isobutylphenylpyruvato)}ethylenediamine platinum (II) (Compound No. 19) was isolated by filtration, washed with water and dried under vacuum. The yield of Compound No. 19 was 73% on the basis of the dinitratoplatinum (II).

Example 24

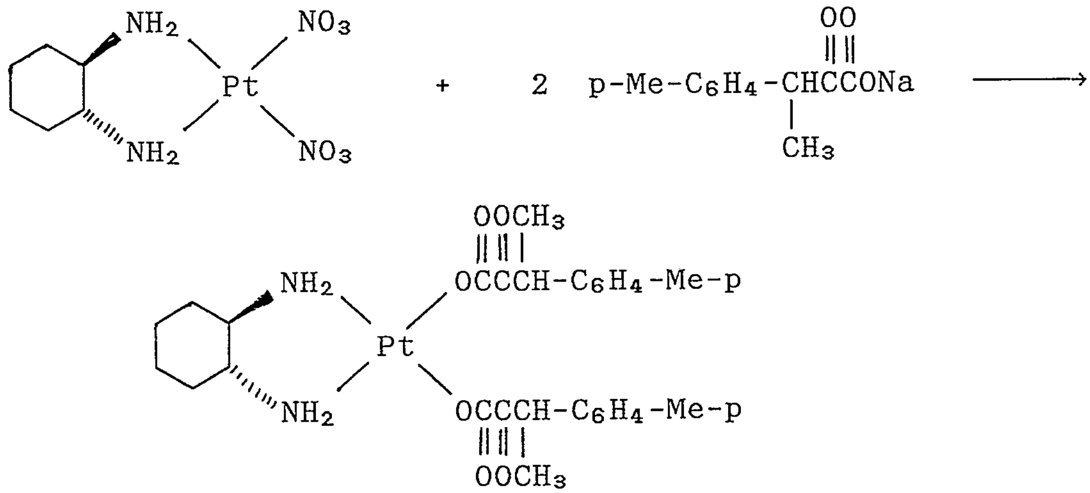

A sodium salt of 3-(p-methylphenyl)-2-oxobutanoic acid (198 mg, 0.46 mmol) was added to an aqueous solution of dinitrato(trans-ℓ-1,2-diaminocyclohexane)platinum (II) (200 mg, 0.46 mmol) and the resulting mixture was stirred at room temperature for 6 hours. After completion of the reaction, the precipitating bis{β-methyl(p-methylphenylpyruvato)}(trans-ℓ-1,2-diaminocyclohexane)platinum (II) (Compound No. 20) was isolated by filtration, washed with water and dried under vacuum. The yield of Compound No. 20 was 86% on the basis of the dinitratoplatinum (II).

Example 25

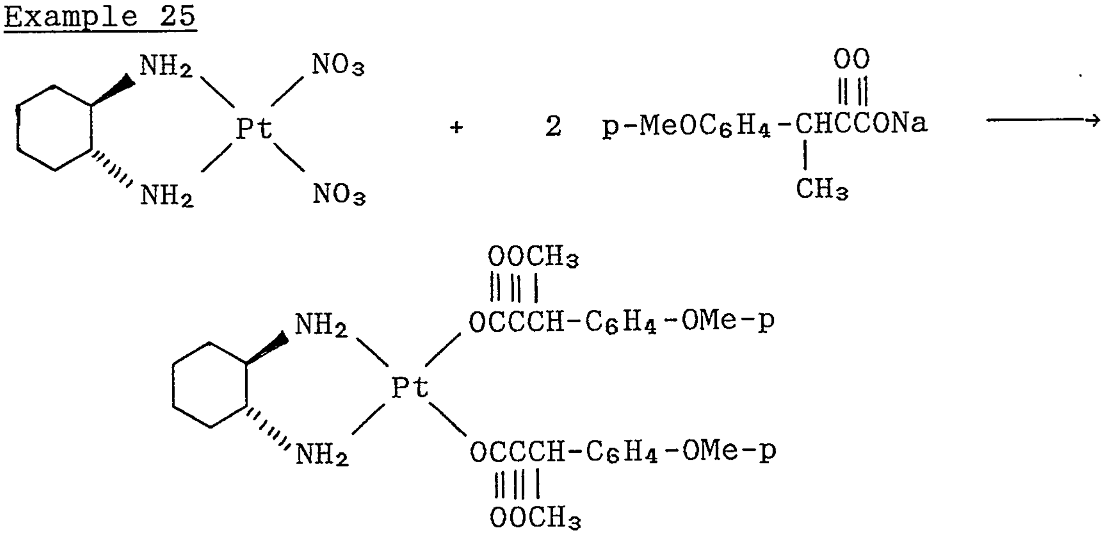

A sodium salt of 3-(p-methoxyphenyl)-2-oxobutanoic acid (212 mg, 0.46 mmol) was added to an aqueous solution of dinitrato(trans-ℓ-1,2-diaminocyclohexane)platinum (II) (200 mg, 0.46 mmol) and the resulting mixture was stirred

at room temperature for 6 hours. After completion of the reaction, the precipitating bis{β-methyl(p-methoxyphenylpyruvato)}(trans-ℓ-1,2-diaminocyclohexane)platinum (II) (Compound No. 21) was isolated by filtration, washed with water and dried under vacuum. The yield of Compound No. 21 was 88% on the basis of the dinitratoplatinum (II).

Example 26

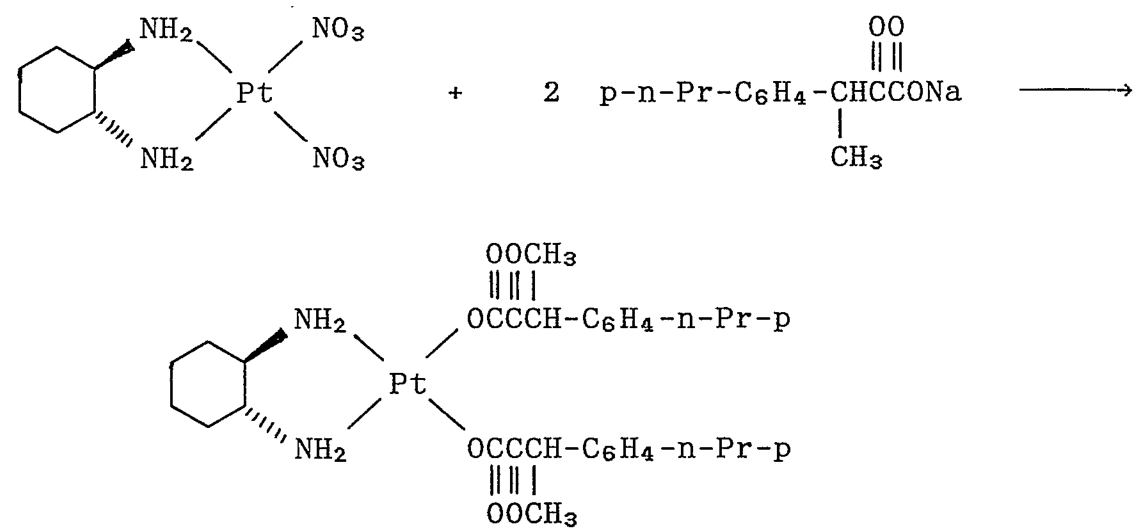

A sodium salt of 3-(p-propylphenyl)-2-oxobutanoic acid (225 mg, 0.46 mmol) was added to an aqueous solution of dinitrato(trans-ℓ-1,2-diaminocyclohexane)platinum (II) (200 mg, 0.46 mmol) and the resulting mixture was stirred at room temperature for 6 hours. After completion of the reaction, the precipitating bis{β-methyl(p-propylphenylpyruvato)}(trans-ℓ-1,2-diaminocyclohexane)platinum (II) (Compound No. 22) was isolated by filtration, washed with water and dried under vacuum. The yield of Compound No. 22 was 88% on the basis of the dinitratoplatinum (II).

Example 27

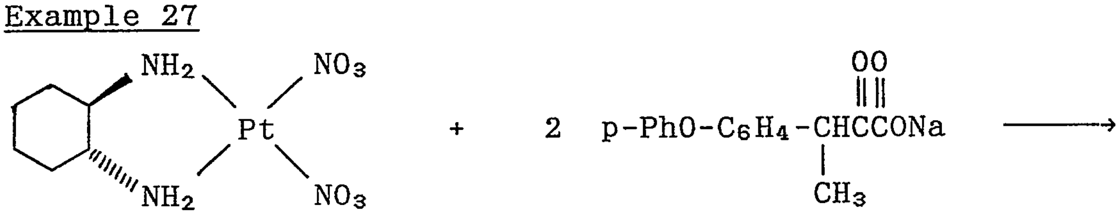

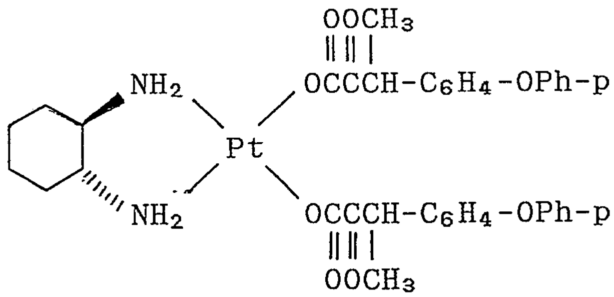

A sodium salt of 3-(p-phenoxyphenyl)-2-oxobutanoic acid (270 mg, 1.0 mmol) was added to an aqueous solution of dinitrato(trans-ℓ-1,2-diaminocyclohexane)platinum (II) (200 mg, 0.46 mmol) and the resulting mixture was stirred at room temperature for 6 hours. After completion of the reaction, the precipitating bis{β-methyl(p-phenoxyphenylpyruvato)}(trans-ℓ-1,2-diaminocyclohexane)platinum (II) (Compound No. 23) was isolated by filtration, washed with water and dried under vacuum. The yield of Compound No. 23 was 78% on the basis of the dinitratoplatinum (II).

<u>Example 28</u>

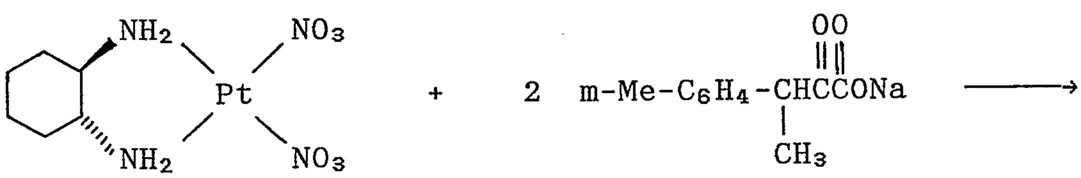

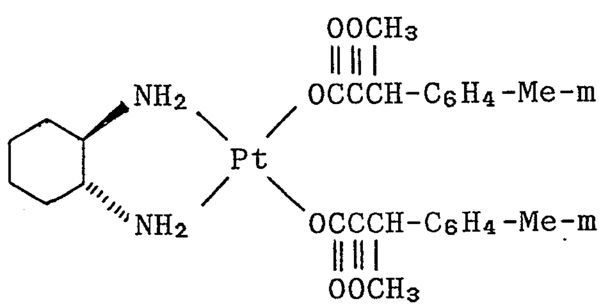

A sodium salt of 3-(m-methylphenyl)-2-oxobutanoic acid (198 mg, 0.46 mmol) was added to an aqueous solution of dinitrato(trans-ℓ-1,2-diaminocyclohexane)platinum (II) (200 mg, 0.46 mmol) and the resulting mixture was stirred at room temperature for 6 hours. After completion of the reaction, the precipitating bis{β-methyl(m-methylphenylpyruvato)}(trans-ℓ-1,2-diaminocyclohexane)platinum (II) (Compound No. 24) was isolated by filtration, washed with water and dried under

vacuum. The yield of Compound No. 24 was 53% on the basis of the dinitratoplatinum (II).

Example 29

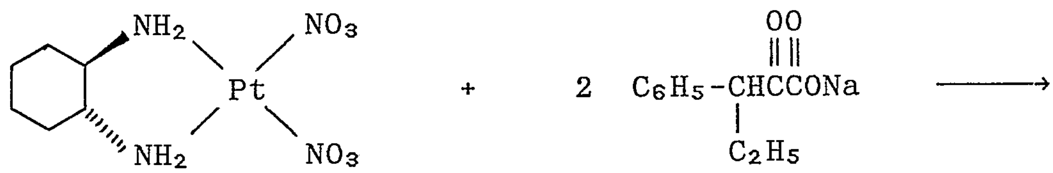

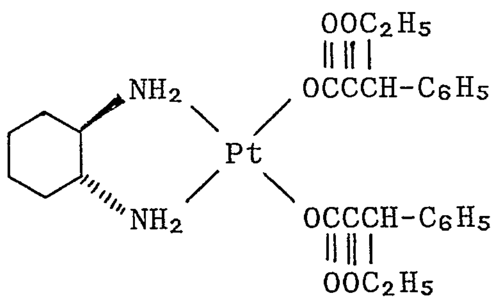

An aqueous solution (100 ml) of a sodium salt of 3-phenyl-2-oxopentanoic acid (450 mg, 2.10 mmol) was added to an aqueous solution (60 ml) of dinitrato(trans-ℓ-1,2-diaminocyclohexane)platinum (Il) (433 mg, 1.00 mmol) and the resulting mixture was stirred at room temperature for 12 hours. After completion of the reaction, the precipitating bis(β-ethylphenylpyruvato)(trans-ℓ-1,2-diaminocyclohexane)platinum (II) (Compound No. 25) was isolated by filtration, washed with water and dried under vacuum. The yield of Compound No. 25 was 67% on the basis of the dinitratoplatinum (II).

Example 30

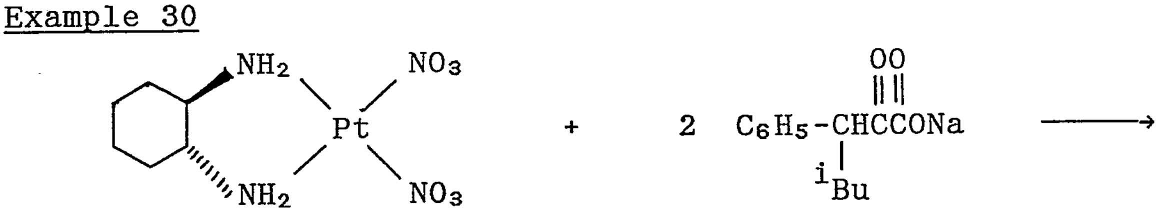

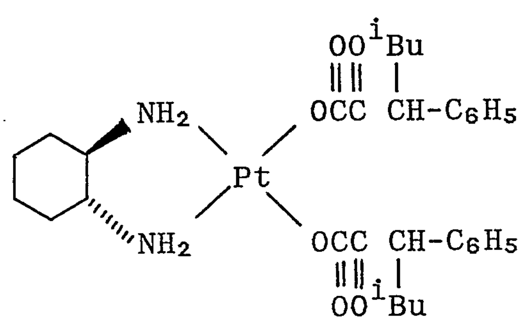

An aqueous solution (100 ml) of a sodium salt of 3-phenyl-5-methyl-2-oxopentanoic acid (520 mg, 2.15 mmol)

was added to an aqueous solution (60 ml) of dinitrato(trans-ℓ-1,2-diaminocyclohexane)platinum (II) (433 mg, 1.00 mmol) and the resulting mixture was stirred at room temperature for 12 hours. After completion of the reaction, the precipitating bis(β-isobutylphenylpyruvato)(trans-ℓ-1,2-diaminocyclohexane)platinum (II) (Compound No. 26) was isolated by filtration, washed with water and dried under vacuum. The yield of Compound No. 26 was 84% on the basis of the dinitratoplatinum (II).

Example 31

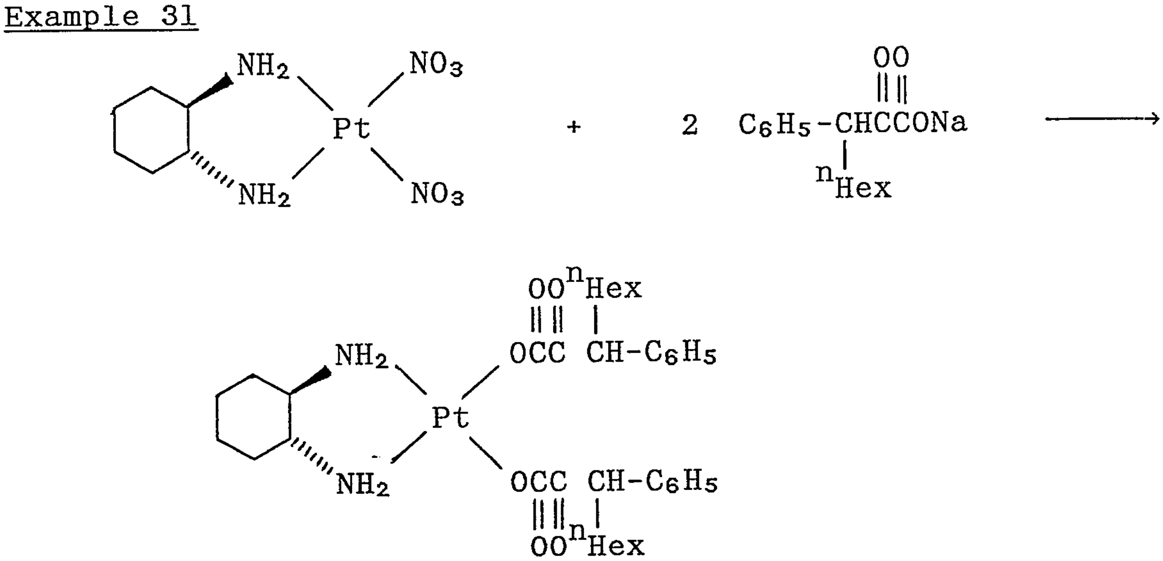

An aqueous solution (100 ml) of a sodium salt of 3-phenyl-2-oxononanoic acid (570 mg, 2.11 mmol) was added to an aqueous solution (60 ml) of dinitrato(trans-ℓ-1,2-diaminocyclohexane)platinum (II) (433 mg, 1.00 mmol) and the resulting mixture was stirred at room temperature for 12 hours. After completion of the reaction, the precipitating bis(β-hexylphenylpyruvato)(trans-ℓ-1,2-diaminocyclohexane)platinum (II) (Compound No. 27) was isolated by filtration, washed with water and dried under vacuum. The yield of Compound No. 27 was 21% on the basis of the dinitratoplatinum (II).

Example 32

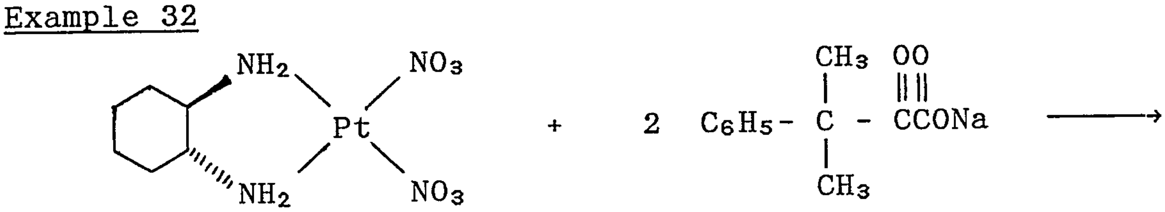

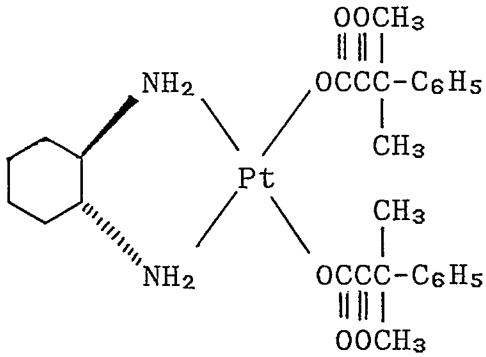

An aqueous solution (100 ml) of a sodium salt of 3-phenyl-3-methyl-2-oxobutanoic acid (450 mg, 2.10 mmol) was added to an aqueous solution (60 ml) of dinitrato(trans-ℓ-1,2-diaminocyclohexane)platinum (II) (433 mg, 1.00 mmol) and the resulting mixture was stirred at room temperature for 12 hours. After completion of the reaction, the precipitating bis(β,β-dimethylphenylpyruvato)(trans-ℓ-1,2-diaminocyclohexane)platinum (II) (Compound No. 28) was isolated by filtration, washed with water and dried under vacuum. The yield of Compound No. 28 was 28% on the basis of the dinitratoplatinum (II).

Example 33

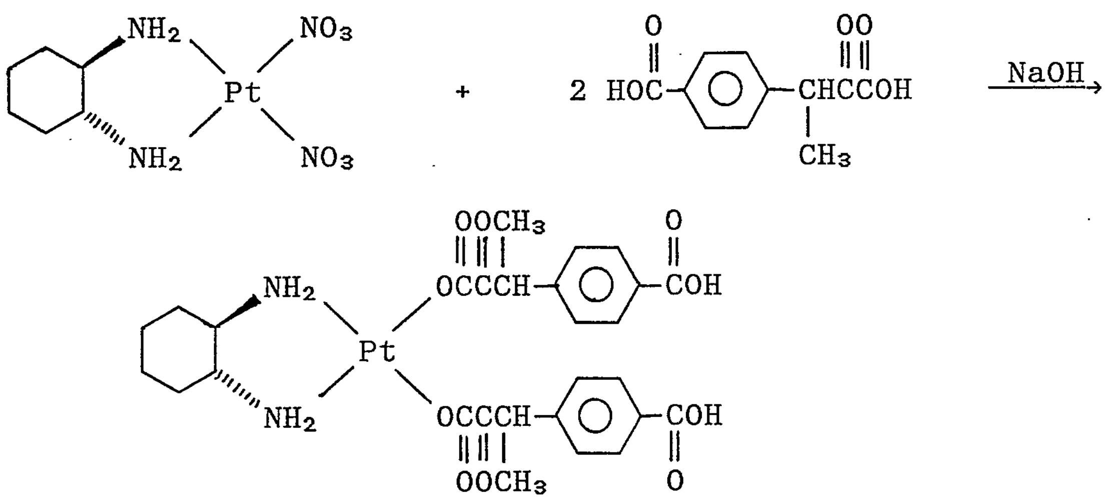


An aqueous solution of 1 N sodium hydroxide (1.0 ml) was added to 3-(p-carboxyphenyl)-2-oxobutanoic acid (222 mg, 1.0 mmol) to prepare a sodium salt of said acid in aqueous solution. The resulting aqueous solution (10 ml) was added to an aqueous solution (20 ml) of dinitrato(trans-ℓ-1,2-diaminocyclohexane)platinum (II) (210 mg, 0.5 mmol) and the resulting mixture was stirred at room temperature

for 12 hours. The precipitating bis{β-methyl(p-carboxyphenylpyruvato)}(trans-ℓ-1,2-diaminocyclohexane)platinum (II) (Compound No. 29) was isolated by filtration, washed successively with water, alcohol and ether, and dried under vacuum. The yield of Compound No. 29 was 36% on the basis of the dinitratoplatinum (II).

Example 34

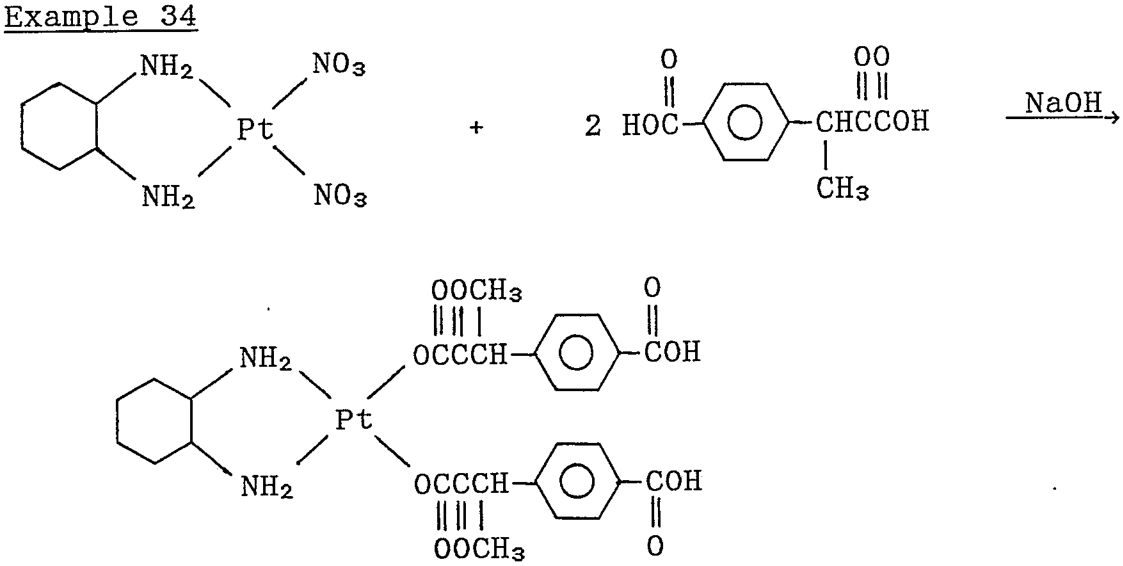


An aqueous solution of 1 N sodium hydroxide (1.0 ml) was added to 3-(p-carboxyphenyl)-2-oxobutanoic acid (222 mg, 1.0 mmol) to prepare a sodium salt of said acid in aqueous solution. The resulting aqueous solution (10 ml) was added to an aqueous solution (20 ml) of dinitrato(trans-d,ℓ-1,2-diaminocyclohexane)platinum (II) (213 mg, 0.5 mmol) and the resulting mixture was stirred at room temperature for 6 hours. The precipitating bis{β-methyl(p-carboxyphenylpyruvato)}(trans-d,ℓ-1,2-diaminocyclohexane)platinum (II) (Compound No. 30) was isolated by filtration, washed thoroughly with water, then washed successively with alcohol and ether, and dried under vacuum. The yield of Compound No. 30 was 36% on the basis of the dinitratoplatinum (II).

Example 35

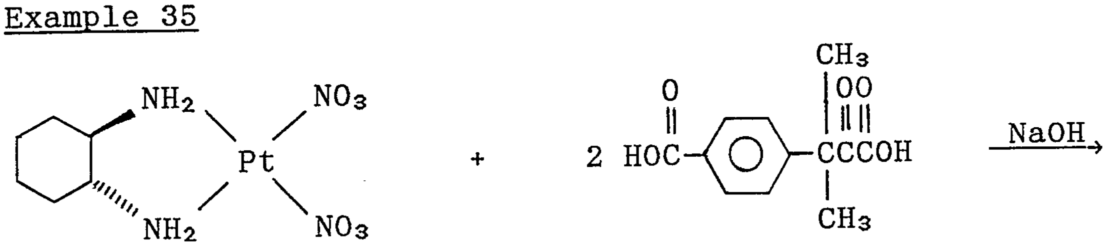

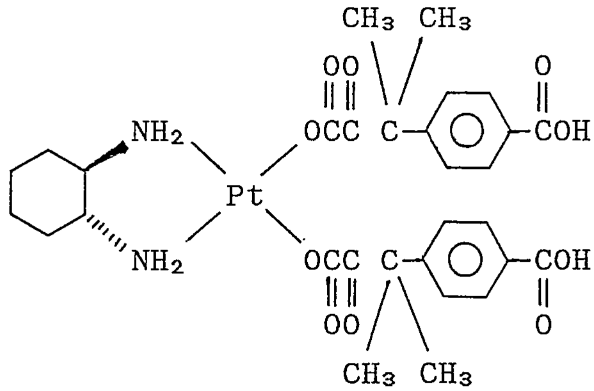

An aqueous solution of 1 N sodium hydroxide (1.0 ml) was added to 3-(p-carboxyphenyl)-3-methyl-2-oxobutanoic acid (236 mg, 1.0 mmol) to prepare a sodium salt of said acid in aqueous solution. The resulting aqueous solution (10 ml) was added to an aqueous solution (20 ml) of dinitrato(trans-ℓ-1,2-diaminocyclohexane)platinum (II) (210 mg, 0.5 mmol) and the resulting mixture was stirred at room temperature for 6 hours. The precipitating bis{β,β-dimethyl(p-carboxyphenylpyruvato)}(trans-ℓ-1,2-diaminocyclohexane)platinum (II) (Compound No. 31) was isolated by filtration, washed thoroughly with water, then washed successively with alcohol and ether, and dried under vacuum. The yield of Compound No. 31 was 41% on the basis of the dinitratoplatinum (II).

<u>Example 36</u>

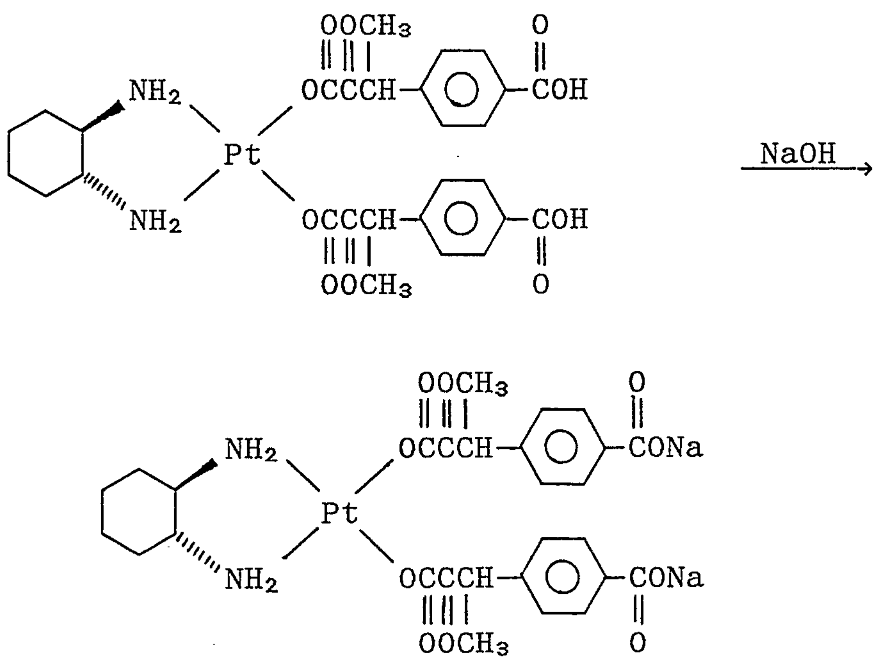

Bis{β-methyl(p-carboxyphenylpyruvato)}(trans-ℓ-1,2-diaminocyclohexane)platinum (II) (75 mg, 0.1 mmol) was synthesized by the method described in Example 33. After adding 0.1 N sodium hydroxide (2 ml), the resulting mixture was stirred at room temperature for 3 hours. When the water was removed from the reaction under vacuum, a sodium salt of bis{β-methyl(p-carboxyphenylpyruvato)}(trans-ℓ-1,2-diaminocyclohexane)platinum (II) (Compound No. 32) was precipitated as a pale yellow solid crystal. This crystal was isolated by filtration, washed thoroughly with alcohol, and dried under vacuum. The yield of Compound No. 32 was 47%.

<u>Example 37</u>

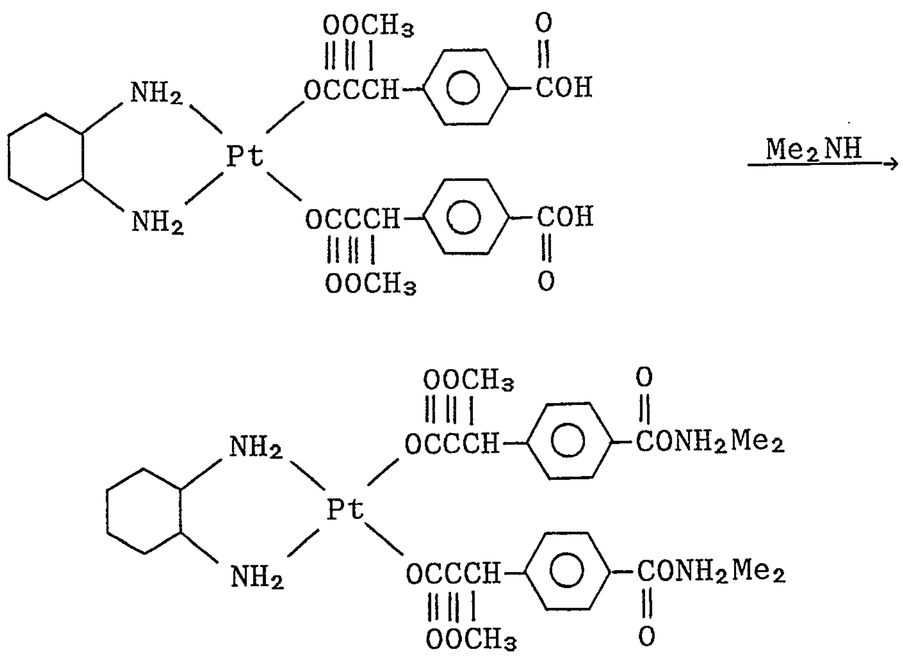


An aqueous solution (2.0 ml) of bis{β-methyl(p-carboxyphenylpyruvato)}(trans-d,ℓ-1,2-diaminocyclohexane)platinum (II) complex (75.1 mg, 0.1 mmol) was synthesized by the method described in Example 34. After adding an aqueous solution of 1% dimethylamine (1.0 ml, ca. 0.2 mmol), the resulting mixture was stirred at room temperature for 12 hours. By filtering off the insoluble matter present in a small amount, a uniform aqueous solution of ammonium salt (Compound No. 33) was obtained.

Table 2

Melting Point and Elemental Analysis Data of Platinum (II) complexes

| Compound No. | m.p. (dec. °C) | Molecular formula | C (%) | | H (%) | | N (%) | |
|---|---|---|---|---|---|---|---|---|
| | | | found | cal'd | found | cal'd | found | cal'd |
| 1 | 219 - 220 | $C_{34}H_{40}N_2O_6Pt$ | 53.52 | 53.19 | 5.06 | 5.25 | 3.91 | 3.65 |
| 2 | 205 - 214 | $C_{34}H_{40}N_2O_6Pt$ | 53.71 | 53.19 | 5.11 | 5.25 | 4.18 | 3.65 |
| 3 | 206 - 208 | $C_{30}H_{36}N_2O_6Pt$ | 50.79 | 50.35 | 4.35 | 5.07 | 4.68 | 3.91 |
| 4 | 204 - 225 | $C_{24}H_{32}N_2O_4Pt$ | 47.88 | 47.44 | 4.81 | 5.31 | 4.61 | 4.61 |
| 5 | 205 - 216 | $C_{32}H_{48}N_2O_4Pt \cdot 2H_2O$ | 51.00 | 50.84 | 6.33 | 6.93 | 3.66 | 3.71 |
| 6 | 200 - 202 | $C_{30}H_{44}N_2O_4Pt$ | 52.73 | 52.09 | 6.46 | 6.41 | 3.78 | 4.05 |
| 7 | 205 - 217 | $C_{32}H_{48}N_2O_4Pt \cdot H_2O$ | 52.29 | 52.09 | 6.63 | 6.83 | 3.92 | 3.80 |
| 8 | 190 - 194 | $C_{24}H_{30}F_2N_2O_4Pt \cdot 2H_2O$ | 42.78 | 42.41 | 4.55 | 5.04 | 4.49 | 4.12 |
| 9 | 199 - 210 | $C_{26}H_{36}N_2O_4Pt \cdot H_2O$ | 47.73 | 47.77 | 5.35 | 5.86 | 4.77 | 4.29 |
| 10 | 192 - 204 | $C_{26}H_{36}N_2O_4Pt \cdot 2H_2O$ | 46.62 | 46.49 | 5.35 | 6.00 | 4.68 | 4.17 |
| 11 | 210 - 213 | $C_{26}H_{32}N_2O_6Pt \cdot H_2O$ | 45.89 | 45.81 | 4.77 | 5.03 | 4.21 | 4.11 |

Table 2 (cont'd)

| Compound No. | m.p. (dec. °C) | Molecular formula | C (%) | | H (%) | | N (%) | |
|---|---|---|---|---|---|---|---|---|
| | | | found | cal'd | found | cal'd | found | cal'd |
| 12 | 205 - 211 | $C_{26}H_{30}F_2N_2O_6Pt \cdot 1/2H_2O$ | 43.86 | 44.07 | 4.24 | 4.41 | 4.00 | 3.95 |
| 13 | 182 - 190 | $C_{38}H_{52}N_2O_6Pt \cdot 5/2H_2O$ | 52.03 | 52.28 | 6.20 | 6.35 | 3.19 | 3.41 |
| 14 | 160 - 175 | $C_{34}H_{48}N_2O_6Pt \cdot H_2O$ | 51.50 | 51.44 | 6.21 | 6.35 | 3.45 | 3.53 |
| 15 | 198 - 214 | $C_{26}H_{32}N_2O_6Pt \cdot 1/2H_2O$ | 46.28 | 46.43 | 4.78 | 4.95 | 4.18 | 4.16 |
| 16 | 163 - 168 | $C_{34}H_{48}N_2O_6Pt \cdot H_2O$ | 51.52 | 51.44 | 6.24 | 6.35 | 3.61 | 3.53 |
| 17 | 203 - 206 | $C_{22}H_{26}N_2O_6Pt \cdot 1/2H_2O$ | 42.81 | 42.72 | 4.22 | 4.40 | 4.60 | 4.53 |
| 18 | 211 - 221 | $C_{22}H_{24}F_2N_2O_6Pt \cdot 1/2H_2O$ | 40.19 | 40.37 | 3.65 | 3.85 | 4.38 | 4.28 |
| 19 | 191 - 197 | $C_{30}H_{42}N_2O_6Pt \cdot 1/2H_2O$ | 49.14 | 49.31 | 6.04 | 5.93 | 3.73 | 3.83 |
| 20 | 187 - 196 | $C_{28}H_{36}N_2O_6Pt \cdot H_2O$ | 47.79 | 47.39 | 5.17 | 5.40 | 4.11 | 3.95 |
| 21 | 183 - 185 | $C_{28}H_{36}N_2O_8Pt \cdot H_2O$ | 45.30 | 45.34 | 4.85 | 5.16 | 3.93 | 3.78 |
| 22 | 152 - 157 | $C_{32}H_{44}N_2O_6Pt \cdot 1/2H_2O$ | 50.84 | 50.79 | 5.88 | 5.95 | 3.70 | 3.72 |

Table 2 (cont'd)

| Compound No. | m.p. (dec. °C) | Molecular formula | C (%) | | H (%) | | N (%) | |
|---|---|---|---|---|---|---|---|---|
| | | | found | cal'd | found | cal'd | found | cal'd |
| 23 | 106 - 148 | $C_{38}H_{40}N_2O_8Pt \cdot H_2O$ | 52.96 | 52.71 | 4.67 | 4.89 | 3.33 | 3.24 |
| 24 | 170 - 186 | $C_{28}H_{36}N_2O_6Pt$ | 43.03 | 48.62 | 4.99 | 5.25 | 4.63 | 4.05 |
| 25 | 216 - 224 | $C_{28}H_{36}N_2O_6Pt \cdot H_2O$ | 47.05 | 47.39 | 4.99 | 5.40 | 4.01 | 3.95 |
| 26 | 239 - 241 | $C_{32}H_{44}N_2O_6Pt \cdot H_2O$ | 50.12 | 50.19 | 5.79 | 6.05 | 3.74 | 3.66 |
| 27 | 212 - 222 | $C_{36}H_{52}N_2O_6Pt \cdot H_2O$ | 52.47 | 52.60 | 6.52 | 6.62 | 3.48 | 3.41 |
| 28 | 201 - 212 | $C_{28}H_{36}N_2O_6Pt \cdot 2H_2O$ | 46.11 | 46.21 | 5.55 | 5.55 | 3.82 | 3.85 |
| 29 | 226 - 239 | $C_{28}H_{32}N_2O_{10}Pt \cdot 2H_2O$ | 43.98 | 43.70 | 4.06 | 4.71 | 3.91 | 3.64 |
| 30 | 236 - 242 | $C_{28}H_{32}N_2O_{10}Pt \cdot 2H_2O$ | 43.65 | 43.70 | 4.95 | 4.71 | 3.43 | 3.64 |
| 31 | 237 - 248 | $C_{30}H_{36}N_2O_{10}Pt \cdot H_2O$ | 45.03 | 45.17 | 4.10 | 4.80 | 3.71 | 3.51 |
| 32 | 235 - 251 | $C_{28}H_{30}N_2O_{10}Na_2Pt \cdot 3H_2O$ | 39.80 | 39.58 | 4.34 | 4.27 | 3.44 | 3.30 |

Table 3

Spectral Data of Platinum (II) Complexes

| Compound No. | $^1$H-NMR ($d_6$-DMSO, TMS, δ ppm) | IR absorption spectra ($cm^{-1}$) νNH | IR absorption spectra ($cm^{-1}$) νCO |
|---|---|---|---|
| 1 | 0.97(2H,br s), 1.30 and 1.39(total 6H,each d,J=7.1, 7.1Hz), 1.46(2H,br s), 1.87(2H,br d), 2.29(2H,br s), 3.84 and 3.85(total 6H,each s), 5.78(2H,br t) 6.05(2H,br t), 6.29 (2H,br d), 6.41(2H,br d), 7.07 and 7.13(total 2H,each dd,J=2.6, 8.9Hz), 7.21 and 7.26(total 2H,each d, J=2.4Hz), 7.39 and 7.45(total 2H, each dd,J=1.7, 8.5Hz), 7.56-7.78(6H,m) | 3210<br>3080 | 1610 |
| 2 | 0.98(2H,br), 1.33(3H,d,J=7.1Hz), 1.39 and 1.40(total 3H,each d, J=7.1Hz), 1.46(2H,br), 1.88(2H,br d), 2.29(2H,br s), 3.40(1H,q,J=7.2Hz), 3.73(1H,q,J=7.1Hz), 3.84 and 3.85 (total 6H,each s), 7.07 and 7.13 (total 2H,each dd,J=2.6, 8.9Hz), 7.21 and 7.26(total 2H,each d, J=2.4Hz), 7.39 and 7.46(total 2H, each m), 7.58-7.78(6H,m) | 3200<br>3080 | 1610 |
| 3 | 1.31 and 1.39(total 6H,each d, J=7.0Hz), 2.44(4H,br s), 3.72(1H,q, J=7.0Hz), 3.84 and 3.85(total 6H, each s), 6.09 and 6.15(total 2H,each br s), 6.56(2H,br s), 7.07 and 7.12 (total 2H,each dd,J=2.3, 8.9Hz), 7.21 and 7.26(total 2H,each d, J=2.3Hz), 7.39 and 7.45(total 2H, each d,J=8.5Hz), 7.58-7.77(6H,m) | 3220<br>3130 | 1610 |
| 4 | 0.98(2H,br s), 1.22(3H,d,J=7.1Hz), 1.31 and 1.33(total 3H,each d, J=7.1Hz), 1.47(2H,br s), 1.88(2H,br), 2.29(2H,br s), 3.24(1H,q,J=7.1Hz), 3.59(1H,q,J=7.1Hz), 5.75 and 5.81(total 1H,each br t), 6.07 and 6.18(total 1H,each br t), 6.19 and 6.28(total 1H,each br d), 6.45 and 6.50(total 1H,each br d), 7.05-7.30(10H,m) | 3280<br>3220<br>3110 | 1620 |

Table 3 (cont'd)

| Compound No. | $^1$H-NMR ($d_6$-DMSO, TMS, δ ppm) | IR absorption spectra ($cm^{-1}$) | |
|---|---|---|---|
| | | νNH | νCO |
| 5 | 0.85(12H,d,J=6.6Hz), 0.98(2H,br s), 1.21(3H,d,J=7.1Hz), 1.29 and 1.31 (total 3H,each d,J=7.1, 7.1Hz), 1.46(2H,br s), 1.78(2H,m), 1.88(2H, br s), 2.29(2H,br s), 2.36 and 2.39 (total 4H,each d,J=7.1, 7.2Hz), 3.24 (1H,q,J=7.1Hz), 3.55(1H,q,J=7.1Hz), 5.77 and 5.83(total 1H,each br t), 6.10 and 6.18(total 1H,each br t), 6.20 and 6.28(total 1H,each br d), 6.48 and 6.53(total 1H,each br d), 6.97(2H,d,J=8.0Hz), 7.05(2H,d, J=8.1Hz), 7.15(4H,m) | 3220<br>3110 | 1620 |
| 6 | 0.88(6H,t,J=7.4Hz), 0.97(2H,br s), 1.20(3H,d,J=7.1Hz), 1.29 and 1.30 (total 3H,each d,J=7.1, 7.3Hz), 1.46 (2H,br s), 1.55(4H,m), 1.88(2H,br), 2.29(2H,m), 3.29(1H,q,J=7.1Hz), 3.55 (1H,q,J=7.3Hz), 5.75 and 5.82(total 1H,each br t), 6.11 and 6.20(total 1H,each br t), 6.21 and 6.28(total 1H,each br d), 6.53 and 6.56(total 1H,each br d), 6.99(2H,d,J=8.0Hz), 7.08(2H,d,J=8.1Hz), 7.15(4H,m) | 3280<br>3220<br>3100 | 1610 |
| 7 | 0.85(12H,d,J=6.6Hz), 0.98(2H,br), 1.23(3H,d,J=7.1Hz), 1.25-1.32(2H,br), 1.30(3H,dd,J=7.1, 5.0Hz), 1.47 (2H,br), 1.78(2H,t sep,J=7.2, 6.6Hz), 1.88(2H,br), 2.27(2H,br), 2.37(4H,d, J=7.2Hz), 3.31(1H,q,J=7.1Hz), 3.55 (1H,q,J=7.1Hz), 5.77 and 5.72(total 1H,each br t), 6.08 and 6.13(total 1H,each br t), 6.21 and 6.30(total 1H,each br d), 6.41 and 6.47(total 1H,each br d), 6.98(2H,d,J=7.9Hz), 7.05(2Hd,J=8.7Hz), 7.15(2H,d, J=8.7Hz), 7.16(2H,d,J=7.9Hz) | 3210<br>3100 | 1610 |
| 8 | 0.90(2H,br), 1.15(3H,d,J=7.1Hz), 1.18(2H,br), 1.23 and 1.24(total 3H, each d,J=7.1Hz), 1.39(2H,br), 1.81 (2H,br d), 2.24(2H,br), 3.20 and 3.54(total 2H,each q,J=7.1Hz), 5.68 and 5.74(total 1H,each br t), 6.12 and 6.14(total 1H,each br t), 6.13 and 6.20(total 1H,each br d), 6.51 and 6.57(total 1H,each br d), 6.92 (2H,dd,J=8.9, 9.0Hz), 7.01(2H,dd, J=8.9, 8.9Hz), 7.20-7.21(4H,m) | 3220<br>3120 | 1610 |

Table 3 (cont'd)

| Compound No. | $^1$H-NMR ($d_6$-DMSO, TMS, δ ppm) | IR absorption spectra ($cm^{-1}$) νNH | νCO |
|---|---|---|---|
| 9 | 0.92(2H,br), 1.12(3H,d,J=7.1Hz), 1.18(2H,br), 1.23(3H,dd,J=4.4, 7.1Hz), 1.40(2H,br), 1.81(2H,br), 2.17(3H,s), 2.20(3H,s), 2.24(2H,br), 3.09(1H,q,J=7.1Hz), 3.47(1H,q,J=7.1Hz), 5.69 and 5.77(total 1H,each br t), 5.98 and 6.06(total 1H,each br t), 6.12 and 6.23(total 1H,each br d), 6.33 and 6.48(total 1H,each br d), 6.78-7.12(6H,m) | 3220<br>3120 | 1610 |
| 10 | 0.77(3H,t,J=7.2Hz), 0.79(3H,t, J=7.0Hz), 0.97(2H,br s), 1.29(2H,br s), 1.44-1.70(4H,m), 1.80-2.05(4H,m), 2.30(2H,br s), 3.04(1H,t,J=7.4Hz), 3.33(1H,t, J=7.6Hz), 5.70-6.80(4H,br), 7.05-7.40(10H,m) | 3230<br>3110 | 1620 |
| 11 | 0.99(2H,br t), 1.27 and 1.30 (total 6H,each d,J=7.0, 7.2Hz), 1.24-1.34(2H,br), 1.47(2H,br d), 1.88(2H,br s), 2.32(2H,br s), 4.21, 4.36 and 4.38(total 2H, each q,J=7.2, 7.0, 7.0Hz), 5.75-6.40(4H,br), 7.20-7.40(10H,m) | 3130<br>3220 | 1640<br>1720 |
| 12 | 0.99(2H,br t), 1.27 and 1.30(total 6H,each d,J=7.0, 7.2Hz), 1.24-1.34 (2H,br), 1.47(2H,br d), 1.88(2H, br t), 2.32(2H,br s), 4.21, 4.36 and 4.38(total 2H,each q,J=7.2, 7.0, 7.0Hz), 5.83(1H,br t), 6.12(1H,br t), 6.28(1H,br t), 6.41(1H,br d), 7.06-7.28(8H,m) | 3140<br>3260 | 1640<br>1720 |
| 13 | 0.95-1.05(2H,br), 1.27 and 1.30 (total 6H,each d,J=7.0, 7.2Hz), 1.13-1.60(total 16H,br), 1.60-2.00 (total 10H,br), 2.20-2.40(2H,br), 4.16, 4.32 and 4.33(total 2H,each q, J=7.2, 7.0, 7.0Hz), 5.70-6.40 (total 4H,br), 7.00-7.15(total 8H,m) | 3120<br>3230 | 1640<br>1720 |

Table 3 (cont'd)

| Compound No. | $^1H$-NMR ($d_6$-DMSO, TMS, δ ppm) | IR absorption spectra ($cm^{-1}$) | |
|---|---|---|---|
| | | νNH | νCO |
| 14 | 0.85(12H,d,J=6.6Hz), 0.95-1.05 (2H,br), 1.26 and 1.29(total 6H, each d,J=7.0, 7.2Hz), 1.20-1.40 (2H,br), 1.73-1.84(2H,m), 1.88 (2H,br t), 2.30-2.35(2H,br), 2.38 (4H,d,J=7.2Hz), 4.21, 4.33 and 4.35 (total 2H,each q,J=7.2, 7.0, 7.0Hz), 5.82(1H,br t), 6.86(1H,br q), 7.02(1H,br t), 7.13(1H,br s), 7.00-7.15(8H,m) | 3140<br>3230 | 1640<br>1720 |
| 15 | 0.99(2H,br t), 1.27 and 1.30 (total 6H,each d,J=7.0, 7.2Hz), 1.24-I.34(2H,br), 1.47(2H,br d), 1.88(2H,br t), 2.32(2H,br s), 4.21, 4.36 and 4.38(total 2H,each q, J=7.2, 7.0, 7.0Hz), 5.82(1H,br t), 6.13(1H,br m), 6.26(1H,br t), 6.41(1H,br m), 7.I4-7.37(10H,m) | 3120<br>3250 | 1640<br>1720 |
| 16 | 0.85(12H,d,J=6.6Hz), 0.95-1.05 (2H,br), 1.26 and 1.29(total 6H, each d,J=7.0, 7.2Hz), 1.20-1.40 (2H,br), 1.73-1.84(2H,m), 1.88 (2H,br t), 2.30-2.35(2H,br), 2.38 (4H,d,J=7.2Hz), 4.21, 4.33 and 4.35 (total 2H,each q,J=7.2, 7.0, 7.0Hz), 5.7-6.4(4H,br), 7.00-7.20(10H,m) | 3130<br>3220 | 1640<br>1720 |
| 17 | 0.99(2H,br t), 1.27 and 1.30 (total 6H,each d,J=7.0, 7.2Hz), 1.24-1.34(2H,br), 1.47(2H,br d), 1.88(2H,br s), 2.32(2H,br s), 4.22, 4.37 and 4.39(total 2H, each q, J=6.9, 7.2Hz), 6.00-6.40(4H,br), 7.16-7.35(10H,m) | 3150<br>3250 | 1640<br>1720 |
| 18 | 1.27 and 1.30(total 6H, each d, J=7.1, 7.2Hz), 2.08(4H,s), 4.21 and 4.39(total 2H,each q,J=7.1, 7.2Hz), 6.02-6.34(4H,br), 7.05-7.25(8H,m) | 3150<br>3240 | 1640<br>1720 |
| 19 | 0.85(12H,d,J=6.6Hz), 1.25 and 1.29 (total 6H,each d,J=7.0, 7.2Hz), 1.75-1.84(2H,m), 2.08(4H,s), 2.38(4H,d,J=7.3Hz), 4.18 and 4.33 (total 2H,each q,J=7.2, 7.0Hz), 5.60-6.40(4H,br), 7.00-7.20(8H,m) | 3140<br>3280 | 1640<br>1720 |

Table 3 (cont'd)

| Compound No. | $^1$H-NMR ($d_6$-DMSO, TMS, $\delta$ ppm) | IR absorption spectra ($cm^{-1}$) | |
|---|---|---|---|
| | | νNH | νCO |
| 20 | 0.99(2H,br t), 1.24 and I.27 (total 6H,each d,J=7.0, 7.2Hz), 1.20-1.40(2H,br), 1.47(2H,br d), 1.88(2H,br t), 2.24 and 2.27 (total 6H,each s), 2.32(2H,br), 4.16, 4.30 and 4.32(total 2H, each q,J=7.2, 7.0, 7.0Hz), 5.79(1H,br), 6.12(1H,br d), 6.25(1H,br t), 6.40(1H,br t), 7.05-7.20(8H,m) | 3120<br>3210 | 1640<br>1715 |
| 21 | 0.99(2H,br t), 1.24 and 1.27 (total 6H,each d,J=7.0, 7.2Hz), 1.48(2H,br), 1.88(2H,br s), 2.32(2H,br s), 3.71, 3.725 and 3.728(total 6H,each s), 4.15, 4.29 and 4.31(total 2H,each q,J=7.2, 7.0, 7.0Hz), 5.81(1H,br t), 6.14(1H,br d), 6.24(1H,br t), 6.43(1H,br s), 6.80-7.15(8H,m) | 3120<br>3220 | 1640<br>1715 |
| 22 | 0.87-0.91(6H,m), 0.99(2H,br t), 1.25 and 1.28(total 6H,each d, J=7.0, 7.2Hz), 1.20-1.40(2H,br), 1.47(2H,br), 1.51-1.60(4H,m), 1.88(2H,br t), 2.32(2H,br s), 2.45-2.60(4H,m), 4.18, 4.32 and 4.44(total 2H,each q,J=7.2, 7.0, 7.0Hz), 5.82(1H,br t), 6.14(1H,br d), 6.27(1H,br t), 6.41(1H,br), 7.00-7.20(8H,m) | 3120<br>3210 | 1640<br>1720 |
| 23 | 1.00(2H,br t), 1.28 and 1.31 (total 6H,each d,J=7.1, 7.2Hz), 1.47(2H,br), 1.89(2H,br t), 2.33(2H,br s), 4.23, 4.37 and 4.39 (total 2H,each q,J=7.2, 7.1, 7.1Hz), 5.84(1H,br), 6.20(1H,br t), 6.29(1H,br), 6.54(1H,br d), 6.85-7.45(18H,m) | 3120<br>3230 | 1640<br>1715 |
| 24 | 1.01(2H,br), 1.25 and 1.28 (total 6H,each d,J=7.0, 7.1Hz), 1.20-1.40(2H,br), 1.49(2H,br), 1.87(2H,br), 2.26 and 2.27 (total 6H,each s), 4.19, 4.31 and 4.33(total 2H,each q,J=7.2, 7.0, 7.0Hz), 5.50-6.50(4H,br), 6.90-7.25(8H,m) | 3120<br>3210 | 1640<br>1715 |

Table 3 (cont'd)

| Compound No. | $^1$H-NMR ($d_6$-DMSO, TMS, δ ppm) | IR absorption spectra ($cm^{-1}$) νNH | νCO |
|---|---|---|---|
| 25 | 0.75(3H,t,J=7.4Hz), 0.77(3H,t, J=7.2Hz), 1.00(2H,br s), 1.29(2H,br), 1.43-1.70(4H,m), 1.80-2.10(4H,m), 2.32(2H,br s), 4.00(1H,t,J=7.3Hz), 4.16 and 4.17(total 1H,each t, J=7.2Hz), 5.70-6.50(4H,br), 7.10-7.50(10H,m) | 3230<br>3150 | 1730<br>1660 |
| 26 | 0.81(12H,m), 1.00(2H,m), 1.18-1.40 (4H,m), 1.40-1.52(4H,m), 1.78(2H,m), 1.89(2H,br s), 2.31(2H,br s), 4.22(1H,t,J=7.0Hz), 4.35(1H,t, J=7.5Hz), 5.65-6.53(4H,br), 7.10-7.40(10H,m) | 3260<br>3130 | 1725<br>1660 |
| 27 | 0.82(6H,br), 1.00(2H,br), 1.18(20H,br), 1.49(4H,m), 1.91(4H,br), 2.31(2H,br s), 4.08(1H,br t), 4.23(1H,br s), 5.75-6.45(4H,br), 7.05-7.50(10H,m) | 3280<br>3130 | 1730<br>1660 |
| 28 | 1.00(2H,br d), 1.28(2H,br s), 1.44(6H,s), 1.48(3H,s), 1.50(3H,s), 1.91(2H,br m), 2.29(2H,br s), 5.70-6.50(4H,br), 7.10-7.50(10H,m) | 3230<br>3130 | 1710<br>1655 |
| 29 | 1.03(2H,br s), 1.28(3H,d,J=7.2Hz), 1.30(3H,d,J=7.4Hz), 1.25-1.30(2H,m), 1.50(2H,m), 1.92(2H,br t,J=12.3Hz), 2.37(2H,br s), 4.24 and 4.27 (total 2H,each q,J=7.2, 7.3Hz), 5.89(1H,br t), 6.04(1H,br s), 6.28(1H,br d), 6.39(1H,br d, J=6.0Hz), 7.23 and 7.29(total 4H, each d,J=8.3Hz), 7.78 and 7.83 (total 4H,each d,J=8.3 and 8.1Hz) | 3220<br>3110 | 1705<br>1610 |
| 30 | 1.03(2H,br s), 1.29(3H,d,J=6.5Hz), 1.30(3H,d,J=7.2Hz), 1.25-1.30(2H,m), 1.49(2H,m), 1.92(2H,br t,J=14.6Hz), 2.37(2H,br s), 4.25 and 4.29 (total 2H,each q,J=6.9 and 7.1Hz), 5.89(1H,br t), 6.04(1H,br s), 6.28(1H,br d), 6.40(1H,br d, J=9.0Hz), 7.23 and 7.30(total 4H, each d,J=8.25Hz), 7.78 and 7.84 (total 4H,each d,J=8.3 and 8.2Hz) | 3250<br>3100 | 1705<br>1610 |

Table 3 (cont'd)

| Compound No. | $^1H$-NMR ($d_6$-DMSO, TMS, δ ppm) | IR absorption spectra ($cm^{-1}$) νNH | νCO |
|---|---|---|---|
| 31 | 1.03(2H,br t,J=9.5Hz), 1.33(2H,m), 1.41(6H,s), 1.45(6H,s), 1.51(2H,m), 1.93(2H,br t,J=13.6Hz), 2.36(2H,br s), 5.89(1H,br t), 6.00(1H,br t), 6.21(1H,br d, J=6.2Hz), 6.40(1H,br d,J=7.0Hz), 7.37 and 7.44(total 4H,each d, J=8.4Hz), 7.77 and 7.82 (total 4H,each d,J=8.4Hz) | 3220<br>3100 | 1695<br>1610 |
| 32 | 1.08(2H,br s), 1.32(6H,s), 1.25-1.35(2H,m), 1.55(2H,m), 1.94(2H,br t,J=11.7Hz), 2.30 and 2.40(total 2H,each dt,J=3.9, 11.3Hz), 7.15(4H,d,J=8.1Hz), 7.80(4H,d,J=8.1Hz), ($d_6$-DMSO-$D_2O$) | 3200<br>3100 | 1710<br>1595 |

Pharmacological Efficacy Test

Growth Suppressing Effect on Mouse Lymphatic Leukemia Tumor Cells, P-388:

Mouse lymphatic leukemia tumor cells, P-388 (5 × $10^4$ cells/ml) were cultivated in a 10% bovine fetal serum supplemented RPAI-1640 liquid culture at 37°C for 48 hours in the presence of selected compounds of the present invention. The number of suspended cells was counted with a Coulter counter and $IC_{50}$ values were determined from dose response curves that were constructed for the respective compounds on the basis of percent growth inhibition as compared to the absence of the compounds. The results are shown in Table 4. No more than 0.5% DMSO was present as a solvent for the test compounds but the percent growth inhibition in the presence of 0.5% DMSO was no more than 10%.

Table 4

Growth Suppressing Effect of Platinum (II) Complexes on Mouse Leukemia Tumor Cells P-388

| Compound No. | $IC_{50}$ | |
|---|---|---|
| | mM | μg/ml |
| 1 | $1.4 \times 10^{-5}$ | 0.011 |
| 2 | $5.1 \times 10^{-5}$ | 0.039 |
| 3 | $1.8 \times 10^{-3}$ | 1.30 |
| 4 | $2.1 \times 10^{-4}$ | 0.13 |
| 5 | $2.3 \times 10^{-4}$ | 0.17 |
| 6 | $4.2 \times 10^{-4}$ | 0.29 |
| 7 | $4.1 \times 10^{-4}$ | 0.30 |
| 8 | $6.0 \times 10^{-5}$ | 0.039 |
| 9 | $7.5 \times 10^{-5}$ | 0.048 |
| 10 | $6.7 \times 10^{-4}$ | 0.46 |
| 11 | $2.9 \times 10^{-4}$ | 0.19 |
| 12 | $2.6 \times 10^{-4}$ | 0.18 |
| 13 | $2.3 \times 10^{-4}$ | 0.19 |
| 14 | $6.0 \times 10^{-5}$ | 0.047 |
| 15 | $2.1 \times 10^{-3}$ | 1.40 |
| 16 | $1.1 \times 10^{-4}$ | 0.085 |
| 17 | $>1.0 \times 10^{-2}$ | - |
| 18 | $\sim 1 \times 10^{-2}$ | 6.50 |
| 19 | $6.0 \times 10^{-3}$ | 4.30 |
| 20 | $3.5 \times 10^{-4}$ | 0.242 |
| 21 | $3.5 \times 10^{-4}$ | 0.253 |
| 22 | $6.5 \times 10^{-4}$ | 0.486 |

Table 4 (cont'd)

| Compound No. | $IC_{50}$ | |
|---|---|---|
| | mM | μg/ml |
| 23 | $4.1 \times 10^{-4}$ | 0.348 |
| 24 | $8.1 \times 10^{-5}$ | 0.056 |
| 25 | $4.7 \times 10^{-4}$ | 0.33 |
| 26 | $4.0 \times 10^{-4}$ | 0.30 |
| 27 | $2.5 \times 10^{-3}$ | 2.0 |
| 28 | $6.7 \times 10^{-4}$ | 0.46 |
| 29 | $3.0 \times 10^{-5}$ | 0.023 |
| 30 | $1.0 \times 10^{-4}$ | 0.078 |
| 31 | $7.1 \times 10^{-5}$ | 0.055 |
| 32 | $6.0 \times 10^{-5}$ | 0.048 |
| 33 | $2.8 \times 10^{-5}$ | 0.024 |
| Control (cisplatin) | $7.5 \times 10^{-5}$ | 0.023 |

INDUSTRIAL APPLICABILITY OF THE INVENTION:

The platinum (II) complexes of the present invention are stable and novel platinum complexes that can be produced in high purity and yield from various, readily available carboxylic acid derivatives by a simple process in an easy manner. These platinum complexes have pronounced antitumor activity and, in addition, they can be rendered highly lipid- or water-soluble through proper selection of the ligand to be used. Some of these complexes have a stronger antitumor activity than cisplatin which is currently used as a cancer control agent. Therefore, the platinum (II) complexes of the present invention have potential utility as new antitumor agents that can be used in place of cisplatin which has strong side effects.

CLAIM

1. A platinum (II) complex represented by the general formula (1)

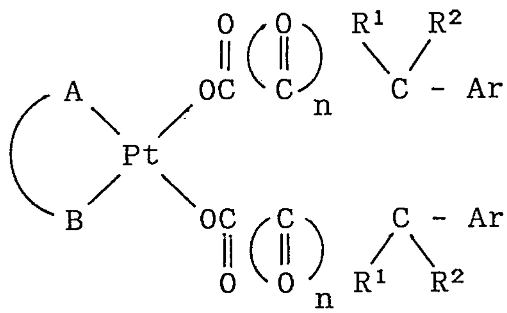

(1)

where $\widehat{AB}$ is a diamine bidentate ligand; $R^1$ and $R^2$ each independently represents a hydrogen atom or an alkyl group having 1 - 8 carbon atoms, provided that $R^1$ and $R^2$ are not both a hydrogen atom; Ar is an aryl group; and n is 0 or 1.

# INTERNATIONAL SEARCH REPORT

International Application No PCT/JP88/01123

**I. CLASSIFICATION OF SUBJECT MATTER** (if several classification symbols apply, indicate all) 6

According to International Patent Classification (IPC) or to both National Classification and IPC

Int.Cl⁴ C07F15/00, C07C87/14, A61K31/28

**II. FIELDS SEARCHED**

Minimum Documentation Searched 7

| Classification System | Classification Symbols |
|---|---|
| IPC | C07F15/00, C07C87/14, A61K31/28 |

Documentation Searched other than Minimum Documentation to the Extent that such Documents are Included in the Fields Searched 8

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| A | US, A, 4359425 (Shionogi & Co.) 16 November 1982 (16. 11. 82) & JP, A, 56-154493 & GB, A, 2074567 & DE, A1, 3117216 | 1 |
| A | US, A, 4115418 (Government of USA) 19 September 1978 (19. 09. 78) (Family: none) | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| January 7, 1989 (07. 01. 89) | January 23, 1989 (23. 01. 89) |
| **International Searching Authority** | **Signature of Authorized Officer** |
| Japanese Patent Office | |